(19) **Europäisches Patentamt / European Patent Office / Office européen des brevets**

(11) **EP 2 795 860 B1**

(12) **FASCICULE DE BREVET EUROPEEN**

(45) Date de publication et mention de la délivrance du brevet:
**17.04.2019 Bulletin 2019/16**

(21) Numéro de dépôt: **12806592.7**

(22) Date de dépôt: **29.11.2012**

(51) Int Cl.:
*H04L 27/26* *(2006.01)*    *H04B 17/00* *(2015.01)*
*H04L 5/00* *(2006.01)*    *H04J 11/00* *(2006.01)*

(86) Numéro de dépôt international:
**PCT/FR2012/052748**

(87) Numéro de publication internationale:
**WO 2013/093271 (27.06.2013 Gazette 2013/26)**

(54) **ÉTABLISSEMENT DE L'INDICATEUR DE QUALITÉ D'UN CANAL RADIO PAR DÉCORRÉLATION DES CONDITIONS RADIO ET DE L'ACTIVITÉ RÉSEAU**

FESTSTELLUNG DES QUALITÄTSINDIKATORS EINES FUNKKANALS DURCH DEKORRELATION DER FUNKBEDINGUNGEN UND DER NETZWERKAKTIVITÄT

ESTABLISHING THE QUALITY INDICATOR OF A RADIO CHANNEL BY DECORRELATING RADIO CONDITIONS AND NETWORK ACTIVITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2011 FR 1161957**

(43) Date de publication de la demande:
**29.10.2014 Bulletin 2014/44**

(73) Titulaire: **Orange**
**75015 Paris (FR)**

(72) Inventeurs:
• **PHAN HUY, Dinh Thuy**
**F-75004 Paris (FR)**
• **DIASCORN, Vincent**
**92190 Meudon (FR)**

(56) Documents cités:
**WO-A2-02/49305**

• **FARAJIDANA A ET AL: "3GPP LTE Downlink System Performance", GLOBAL TELECOMMUNICATIONS CONFERENCE, 2009. GLOBECOM 2009. IEEE, IEEE, PISCATAWAY, NJ, USA, 30 novembre 2009 (2009-11-30), pages 1-6, XP031645495, ISBN: 978-1-4244-4148-8 cité dans la demande**

**Description**

Le domaine de l'invention est celui des réseaux de télécommunications cellulaires sans fil, et en particulier les réseaux cellulaires utilisant le multiplexage par répartition en fréquences orthogonales (OFDM en anglais) pour la transmission de données vers des terminaux mobiles.

Dans ce type de réseaux cellulaires, le terminal mobile d'un usager mesure habituellement la qualité de son canal de communication radio grâce à des pilotes envoyés par la station de base sur la voie descendante, avant de remonter sur la voie montante un indicateur de qualité du canal, appelé « Channel Quality Indicator » (CQI) en anglais, à cette station de base.

Un tel indicateur CQI est représentatif du rapport signal sur bruit et interférence (SINR pour $\underline{S}$ignal To $\underline{I}$nterference and $\underline{N}$oise $\underline{R}$atio en anglais) perçu par le terminal mobile au moment de sa mesure.

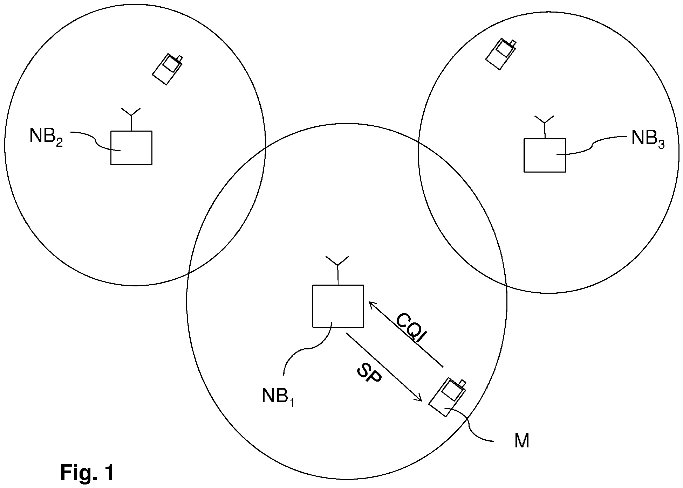

La **figure 1** illustre le procédé typique d'établissement d'un tel indicateur de qualité dans un réseau cellulaire comprenant, à titre purement illustratif, trois stations de base $NB_1$ à $NB_3$ situées respectivement dans trois cellules voisines de ce réseau.

Dans les cellules associées aux stations de base $NB_2$ et $NB_3$, voisines de la première cellule, ces stations de base $NB_2$ et $NB_3$ émettent des signaux de nature à interférer la communication, dans la première cellule, entre le premier dispositif émetteur $NB_1$ et un terminal mobile M.

Afin de tenir compte de ce phénomène d'interférence intercellulaire, la station de base $NB_1$ émet, dans la première cellule qui lui est associée, un signal pilote SP, dont les caractéristiques sont connues du terminal mobile M, sur la voie descendante d'un canal de communication radio afin que ce terminal mobile M puisse effectuer une mesure du rapport signal sur bruit et interférence SINR (par comparaison avec les caractéristiques connues) et en déduire l'indicateur CQI correspondant.

Le terminal mobile M peut alors transmettre en retour, sur la voie montante du canal de communication radio à évaluer, l'indicateur CQI à la station de base $NB_1$, afin que cette dernière prenne connaissance des conditions de transmission sur ce canal, telles que mesurées par le terminal mobile M, et puisse adapter le débit de transmission à ces conditions.

Cet indicateur CQI est en particulier utilisé par la station de base $NB_1$ pour prédire le rapport signal sur bruit et interférence SINR qui sera subi par le terminal mobile M dans le futur, et ainsi sélectionner le débit adapté à ce rapport signal sur bruit et interférence SINR tel que prédit. En particulier, plus le rapport signal sur bruit et interférence SINR prédit est élevé, et plus le débit sélectionné est élevé, et vice versa.

L'efficacité de ce type de mécanisme, appelé « adaptation de lien » (« link adaptation » ou « Adaptive Modulation and Coding » en anglais) dépend de la pertinence de l'indicateur CQI remonté à la station de base.

Si cet indicateur CQI est sous-estimé, le débit sélectionné par la station de base est plus faible que le débit optimal, ce qui engendre une perte d'efficacité.

Si par contre cet indicateur CQI est surestimé, le débit sélectionné par la station de base est alors plus élevé que le débit optimal, ce qui peut engendrer une augmentation du nombre de retransmissions des données, et par conséquent une augmentation du délai de transmission.

Ceci est particulièrement problématique dans le cas d'un usager utilisant un service sporadique (c'est-à-dire dans lequel des paquets de données sont envoyés de manière sporadique) et en temps réel (donc avec une forte contrainte de délai), comme c'est le cas de services concernant la transmission de voix, le streaming ou les jeux vidéos en réseau.

En effet, lorsqu'un tel usager, dit « usager cible », se trouve dans une cellule d'un réseau cellulaire, il se peut qu'un autre usager, dit « usager interférent », utilise également un service sporadique dans une cellule voisine de cette cellule, ce qui peut créer une interférence sporadique qui n'est pas forcément reflétée par l'indicateur CQI remonté à la station de base de la cellule de l'usager cible.

En fait, dans une telle situation d'interférence sporadique, l'indicateur CQI remonté peut alors représenter un rapport signal sur bruit et interférence SINR qui diffère énormément du rapport signal sur bruit et interférence SINR effectivement subi lors de la transmission de données.

Deux cas de figures peuvent alors se produire :

- dans un premier cas, l'indicateur CQI remonté se révèle trop optimiste : si au moment de la mesure du CQI par le terminal de l'usager cible, les cellules interférentes sont inactives, et qu'au moment de la transmission de données, elles deviennent actives, l'indicateur CQI remonté sera trop élevé par rapport à la situation réelle, et donc le débit utilisé par la station de base sera trop élevé, ce qui engendre un grand nombre de retransmissions dégradant fortement la qualité du service temps réel de l'usager cible.
- dans un deuxième cas, l'indicateur CQI remonté se révèle trop pessimiste : si au moment où le terminal de l'usager cible effectue sa mesure de CQI, les cellules interférentes sont actives et qu'au moment de la transmission de données elles deviennent inactives, l'indicateur CQI remonté sera alors trop faible, et le débit sélectionné par la station de base sera plus faible que le débit optimal. La capacité de la cellule (en termes de nombre d'usagers supportés) sera alors amoindrie.

Ce phénomène est habituellement désigné sous le terme de « discordance de CQI » (« CQI mismatch » en anglais) et a été observé et mesuré dans "3GPP LTE Downlink System Performance", Farajidana et al., Global Telecommunications Conference, GLOBECOM 2009, où la notion d'usager interférent sporadique est désignée sous le terme de « partial loading ».

On remarquera que ce phénomène de discordance de CQI peut également exister même lorsque le trafic interférent dans les cellules voisines n'est pas sporadique. Par exemple, la discordance de CQI peut être causée par un effet « flash light » correspondant à la situation où une cellule voisine, bien que transmettant de manière continue (i.e. en « full loading »), sature et interfère fortement de manière sporadique les usagers cibles, du fait de processus de focalisation de faisceau (« beam forming »).

Comme la discordance de CQI impacte principalement les usagers cibles ayant un ratio interférence sur bruit non négligeable, les usagers en bordure de cellule sont les plus affectés par cette discordance de CQI.

Un certain nombre de techniques ont été développées afin d'essayer de résoudre ce problème de discordance de CQI :

- La station de base peut appliquer une marge fixe à l'indicateur CQI reporté par le terminal mobile. La station de base utilise donc un CQI pessimiste en entrée de son mécanisme d'adaptation de lien, pour être robuste aux variations d'interférence. Cette technique présente l'inconvénient d'appliquer la même marge à tous les mobiles, quelle que soit leur caractéristique, et se trouve donc être sous-optimale.
- La station de base peut moyenner plusieurs indicateurs CQI reportés par le terminal mobile. La station de base utilise alors un indicateur CQI moyenné en entrée de son mécanisme d'adaptation de lien pour être robuste aux variations d'interférence. Cette technique reste sous-optimale, surtout dans la mesure où le problème d'optimisation de la fenêtre de moyennage, par cellule, est difficile à résoudre.
- Il a été envisagé de recourir à des procédés d'annulation d'interférence, qui se révèlent cependant être extrêmement complexes car, lors de la réception de données, le terminal mobile doit être capable de démoduler conjointement le signal utile et le signal interférent pour supprimer le signal interférent. Cette complexité est proportionnelle au nombre d'éléments interférents à supprimer.
- On peut également utiliser une technique où toutes les cellules transmettent tout le temps, et éventuellement des bits de padding, afin de créer une interférence stable. Une telle technique est sous-optimale, car de l'énergie est dépensée inutilement pour transmettre des bits (padding) sans signification (padding), ce qui est d'autant plus sous-optimal lorsque le réseau est faiblement chargé.
- Il est possible de recourir des techniques de coordination d'interférence entre cellules (ICIC), qui se révèlent cependant également très complexes en termes de planification et n'empêchent pas la persistance de zones de recouvrement entrainant une réduction de la capacité de la cellule.
- Il a été également envisagé de placer un atténuateur dans le terminal mobile, juste derrière l'antenne de réception et avant la chaîne de traitement de signal analogique-numérique. Cet atténuateur atténue le signal reçu avant que le bruit dû à la conversion analogique numérique soit ajouté. Avec un bon atténuateur, l'interférence devient négligeable devant le bruit, et le système devient moins sensible aux variations d'interférence.

Cette solution présente cependant l'inconvénient d'entraîner une atténuation du signal utile reçu par le terminal mobile, qui perd donc systématiquement en capacité et en couverture. En outre, la performance de l'atténuateur dépend des constructeurs de mobile et ne peut donc être garantie.

- On peut enfin utiliser une technique d'adaptation de lien telle que décrite dans l'article "Performance aspects of LTE uplink with variable load and bursty data traffic," Rosa C. et al., Personal Indoor and Mobile Radio Communications (PIMRC), 2010.

Dans cette technique, la station de base applique un offset au CQI en entrée du mécanisme d'adaptation de lien. L'offset est contrôlé par une boucle. Si la station de base reçoit un message « NACK » pour un paquet reçu par le mobile, la station de base applique un offset diminué, et s'il reçoit un message « ACK », il applique un offset augmenté, la relation entre les pas d'augmentation et de diminution de l'offset dépendant du ratio « Block Error Rate » cible.

Cette technique présente l'inconvénient que la station de base ne peut jouer sur l'offset que lorsque des données sont transmises. Or, pour un service temps réel sporadique, les occasions de transmission de données sont peu fréquentes. La boucle de contrôle de BLER a donc des difficultés pour converger Le document WO0249305 divulgue un procédé dans lequel un signal pilote de charge totale es transmis sur la même sous-porteuse et durant le même temps symbole que des pilotes des cellules voisines. Le signal pilote de charge totale permet la mesure d'un indicateur de qualité en charge totale, reflétant la charge totale atteinte lorsque toutes les cellules voisines de la première cellule transmettent des données.

La présente invention a donc pour but de résoudre le problème de discordance de CQI sans engendrer les inconvénients des techniques antérieures, notamment en termes d'accroissement de complexité, de sous-optimisation et de perte de capacité.

A cette fin, l'invention propose un procédé d'établissement d'un indicateur de qualité d'un canal de transmission radio dans une première cellule d'un réseau cellulaire utilisant une pluralité de sous-porteuses orthogonales multiplexées en fréquence pour transmettre des données, le procédé comprenant :

la transmission, par un premier dispositif émetteur situé dans la première cellule, d'un signal pilote de référence comprenant un signal pilote de charge totale modulant au moins une des sous-porteuses orthogonales, durant au moins un premier temps symbole dédié à la transmission de symboles autres que des symboles de données, et un signal pilote de charge effective modulant au moins une des sous-porteuses orthogonales durant au moins un deuxième temps symbole dédié à la transmission de symboles de données ;

pour chaque cellule voisine de la première cellule dans le réseau cellulaire, la transmission, par un dispositif émetteur situé dans cette cellule voisine, d'un signal pilote interférent modulant, durant le au moins un premier temps symbole pendant lequel le signal pilote de charge totale module au moins une des sous-porteuses, cette au moins une sous-porteuse modulée par le signal pilote de charge totale ;

la mesure, par un dispositif récepteur situé dans la première cellule, d'un indicateur de qualité du canal en charge totale au moyen du signal pilote de charge totale et d'un indicateur de qualité du canal en charge effective au moyen du signal pilote de charge effective ; et

la détermination de l'indicateur de qualité du canal de transmission radio à partir de l'indicateur de qualité du canal en charge effective et de l'indicateur de qualité du canal en charge totale.

Dans un mode particulier de réalisation, le signal pilote de charge totale comprend au moins deux symboles pilotes de charge totale modulant respectivement au moins deux sous-porteuses durant au moins un premier temps symbole dédié à la transmission de symboles autres que des symboles de données ou une sous-porteuse durant au moins deux premiers temps symbole dédiés à la transmission de symboles autres que des symboles de données, et le signal pilote interférent comprend une pluralité de symboles pilotes interférents parmi lesquels au moins deux symboles pilotes interférents modulent respectivement, pour chacun des symboles pilotes de charge totale, la sous-porteuse modulée par ledit symbole pilote de charge totale durant le premier temps symbole où ladite sous-porteuse est modulée par ledit symbole pilote de charge totale.

Selon un aspect avantageux de l'invention, le signal pilote interférent ne module pas, durant le au moins un deuxième temps symbole pendant lequel le signal pilote de charge effective module au moins une desdites sous-porteuses, cette au moins une sous-porteuse modulée par le signal pilote de charge effective.

Dans un mode particulier de réalisation, le signal pilote de charge effective comprend au moins deux symboles pilotes de charge effective modulant respectivement au moins deux sous-porteuses durant au moins un deuxième temps symbole dédié à la transmission de symboles de données ou une sous-porteuse durant au moins deux deuxièmes temps symbole dédiés à la transmission de symboles de données, et le signal pilote interférent ne contient pas de symbole modulant, durant le au moins un deuxième temps symbole pendant lequel un symbole pilote de charge effective module une des sous-porteuses, cette sous-porteuse modulée par le symbole pilote de charge effective.

Selon un mode particulier de réalisation où les symboles pilotes du signal pilote de référence sont disposés selon un premier motif prédéterminé dans un bloc bidimensionnel temps-fréquence, dans chacune desdites cellules voisines, le signal pilote interférent comprend une pluralité de symboles pilotes disposés selon ledit motif prédéterminé et décalés en fréquence par rapport aux symboles pilotes du signal pilote de référence et le signal pilote interférent comprend en outre une pluralité de symboles pilotes complémentaire modulant respectivement, durant chaque premier temps symbole pendant lequel un symbole pilote de charge totale module une sous-porteuse, l'ensemble des sous-porteuses, parmi la pluralité de sous-porteuses orthogonales, qui ne sont modulées par aucun symbole.

Dans un mode particulier de réalisation, la détermination de l'indicateur de qualité du canal comprend le calcul de la valeur minimale, sur une fenêtre de temps, de la fonction différence entre l'indicateur de qualité du canal en charge effective et l'indicateur de qualité du canal en charge totale, l'indicateur de qualité du canal étant déterminé comme étant la somme de l'indicateur de qualité du canal en charge totale et de ladite valeur minimale.

Dans un autre mode particulier de réalisation, la détermination de l'indicateur de qualité du canal comprend le calcul de la valeur moyenne, sur une fenêtre de temps, de la fonction différence entre l'indicateur de qualité du canal en charge effective et l'indicateur de qualité du canal en charge totale, l'indicateur de qualité du canal étant déterminé comme étant la somme de l'indicateur de qualité du canal en charge totale et de ladite valeur moyenne.

Dans un autre mode particulier de réalisation, la détermination de l'indicateur de qualité comprend le calcul de la valeur minimale, de la valeur moyenne et de la valeur maximale, sur une fenêtre de temps, de la fonction différence entre l'indicateur de qualité du canal en charge effective, l'indicateur de qualité du canal est déterminé comme étant la somme de l'indicateur de qualité du canal en charge totale et d'une deuxième variable, cette deuxième variable étant choisie comme étant égale à cette valeur minimale ou cette valeur maximale en fonction de la comparaison de la valeur moyenne avec un seui.

Selon un mode de réalisation où la détermination de l'indicateur de qualité du canal de transmission radio est réalisée dans le premier dispositif émetteur, le procédé comprend en outre la transmission de l'indicateur de qualité du canal en charge totale et de l'indicateur de qualité du canal en charge effective du dispositif récepteur vers le premier dispositif émetteur.

Selon un autre mode de réalisation où la détermination de l'indicateur de qualité du canal de transmission radio est réalisée dans le dispositif récepteur, le procédé comprend en outre la transmission de l'indicateur de qualité du dispositif récepteur vers le premier dispositif émetteur.

Dans un mode particulier de réalisation, les dispositifs émetteurs de la première cellule et des cellules voisines sont des stations de bases et le dispositif récepteur est un terminal mobile.

L'invention propose en outre un programme d'ordinateur comprenant des instructions pour l'exécution des étapes du procédé de détermination de l'indicateur de qualité ci-avant, lorsque ledit programme est exécuté par un module de traitement d'un dispositif émetteur ou d'un dispositif récepteur. Un tel programme d'ordinateur doit être considéré comme un produit dans le cadre de la protection qui est recherchée par la présente demande de brevet.

L'invention propose en outre une station de base pour l'établissement d'un indicateur de qualité d'un canal de transmission radio avec au moins un terminal mobile, la station de base étant apte à transmettre des données au moyen d'une pluralité de sous-porteuses orthogonales multiplexées en fréquence et comprenant un module émetteur configuré pour émettre, vers le terminal mobile, un signal pilote de référence comprenant un signal pilote de charge totale modulant au moins une desdites sous-porteuses orthogonales, durant au moins un premier temps symbole dédié à la transmission de symboles autres que des symboles de données, et un signal pilote de charge effective modulant au moins une desdites sous-porteuses orthogonales durant au moins un deuxième temps symbole dédié à la transmission de symboles de données, et le signal pilote de charge totale et signal pilote de charge effective étant aptes à être utilisés par le terminal mobile pour mesurer respectivement un indicateur de qualité en charge totale et un indicateur de qualité en charge effective aptes à être utilisés pour déterminer l'indicateur de qualité.

Dans un mode de réalisation particulier, cette station de base comprend en outre un module de réception apte à recevoir l'indicateur de qualité en charge totale et l'indicateur de qualité en charge effective mesurés par le terminal mobile et un module de traitement configuré pour déterminer l'indicateur de qualité au moyen de l'indicateur de qualité en charge effective et de l'indicateur de qualité en charge totale.

L'invention propose aussi un terminal mobile pour l'établissement d'un indicateur de qualité d'un canal de transmission radio avec une station de base apte à transmettre des données au moyen d'une pluralité de sous-porteuses orthogonales multiplexées en fréquence et comprenant un module émetteur apte à recevoir, de ladite station de base, un signal pilote de référence comprenant un signal pilote de charge totale modulant au moins une desdites sous-porteuses orthogonales, durant au moins un premier temps symbole dédié à la transmission de symboles autres que des symboles de données, et un signal pilote de charge effective modulant au moins une desdites sous-porteuses orthogonales durant au moins un deuxième temps symbole dédié à la transmission de symboles de données, ainsi qu'un module de traitement configuré pour mesurer un indicateur de qualité en charge totale au moyen du signal pilote de charge totale et un indicateur de qualité en charge effective au moyen du signal pilote de charge effective, l'indicateur de qualité en charge effective et l'indicateur de qualité en charge totale étant aptes à être utilisés pour déterminer l'indicateur de qualité.

Dans un mode de réalisation particulier de ce terminal, le module de traitement est configuré en outre pour déterminer l'indicateur de qualité au moyen de l'indicateur de qualité en charge effective et de l'indicateur de qualité en charge totale, le terminal mobile comprenant en outre un module d'émission configuré pour transmettre l'indicateur de qualité à la station de base.

Enfin, la présente invention propose un réseau cellulaire dans lequel une pluralité de sous-porteuses orthogonales multiplexées en fréquence sont utilisées pour transmettre des données, le réseau cellulaire comprenant au moins une première station de base tel que décrit ci-avant, au moins une deuxième station de base, située dans une cellule voisine de la cellule dans laquelle est située la première station de base, la deuxième station de base émettant un signal pilote interférent modulant, durant au moins un premier temps symbole pendant lequel le signal pilote de charge totale module au moins une desdites sous-porteuses, ladite au moins une sous-porteuse modulée par le signal pilote de charge totale .

D'autres caractéristiques et avantages apparaîtront à la lecture de la description et des figures dans lesquelles, outre la figure 1 déjà mentionnée au sujet de l'état de la technique :

- la figure 2 illustre les étapes d'un procédé d'établissement d'un indicateur de qualité CQI selon le principe de la présente invention ;

- les figures 3A à 3E illustrent l'étape de détermination d'un indicateur de qualité CQI, à partir d'un indicateur de qualité en charge totale $CQI_{CT}$ et d'un indicateur de qualité en charge effective $CQI_{CE}$, selon différents modes de réalisation de la présente invention ;
- les figures 4A et 4B illustrent respectivement les étapes d'un procédé d'établissement d'un indicateur de qualité CQI et un réseau cellulaire dans lequel est mis en oeuvre ce procédé selon un premier mode de réalisation de la présente invention ;
- les figures 5A et 5B illustrent respectivement les étapes d'un procédé d'établissement d'un indicateur de qualité CQI et un réseau cellulaire dans lequel est mis en oeuvre ce procédé selon un deuxième mode de réalisation de la présente invention ;
- les figures 6A à 6C illustrent un signal pilote de référence selon le principe de la présente invention, tel qu'émis par un premier dispositif émetteur situé dans une première cellule d'un réseau cellulaire, représenté selon un bloc bidimensionnel en temps et fréquence dans différentes situations ;
- la figure 6D illustre un signal pilote interférent selon le principe de la présente invention, tel qu'émis par un deuxième dispositif émetteur situé dans une cellule voisine de la première cellule dans le réseau cellulaire, représenté selon le même bloc bidimensionnel en temps et fréquence ;
- les figures 7A à 7C illustrent un signal pilote de référence et un signal pilote interférent tels qu'émis par deux cellules voisines d'un réseau cellulaire dans un mode particulier de réalisation de la présente invention ; et
- les figures 8A et 8B illustrent un signal pilote de référence et un signal pilote interférent tels qu'émis par deux cellules voisines d'un réseau cellulaire dans un autre mode particulier de réalisation de la présente invention.

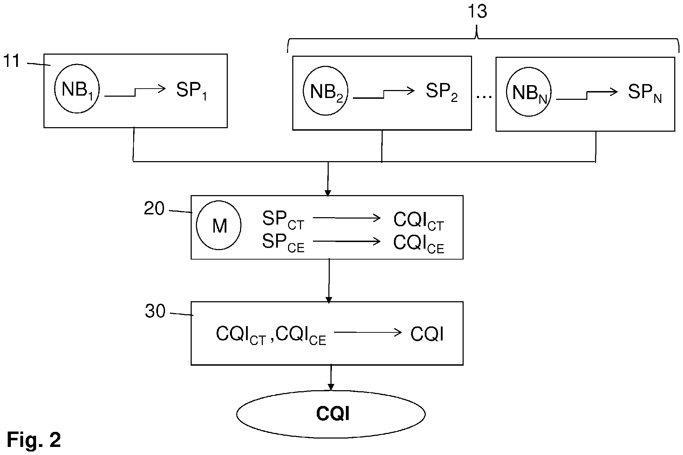

On se réfère maintenant à la **figure 2,** laquelle illustre les étapes d'un procédé d'établissement d'un indicateur de qualité CQI du canal de transmission radio selon la présente invention.

En particulier, ce procédé est mis en oeuvre dans un réseau cellulaire, similaire au réseau cellulaire illustré sur la figure 1, et utilisant un ensemble de L sous-porteuses $f_0, ..., f_{L-1}$ pour la transmission de données, notamment sur la voie descendante, selon la technique de multiplexage par répartition en fréquences orthogonales (OFDM pour Orthogonal Frequency Division Multiplexing en anglais).

Ce réseau cellulaire comporte un certain nombre de cellules parmi lesquelles se trouve une première cellule dans la laquelle se situe un premier dispositif émetteur $NB_1$ et un dispositif récepteur M communiquant sur un canal radio de communication, par exemple en mode FDD (pour Frequency Division Duplex), c'est-à-dire avec une première fréquence dédiée à la voie descendante et une deuxième fréquence dédiée à la voie montante.

Le premier dispositif émetteur $NB_1$ est typiquement une station de base, par exemple un « e-Node B » lorsque le réseau cellulaire est de type 3GPP LTE, disposant d'une antenne émettrice capable d'émettre des signaux transmis sur le canal radio de communication.

Le dispositif récepteur M est typiquement un terminal mobile tel qu'un téléphone mobile, un smartphone ou un ordinateur portable, disposant d'une antenne réceptrice capable de recevoir des signaux transmis sur le canal radio de communication.

Cette première cellule est entourée par un certain nombre de cellules voisines. La figure 1 illustre plus particulièrement deux cellules voisines de la première cellule, afin d'illustrer simplement le principe invention, mais l'invention s'applique avec un nombre quelconque de cellules voisines dans lesquelles se situe un dispositif émetteur émettant un signal pouvant interférer avec des signaux transmis sur le canal radio utilisé dans la première cellule.

Dans la deuxième cellule voisine de la première cellule se trouve notamment un deuxième dispositif émetteur $NB_2$ dont les signaux émis sont de nature à interférer la communication, dans la première cellule, entre le premier dispositif émetteur NB 1 et le dispositif récepteur M.

Dans le procédé selon le principe de la présente invention, le premier dispositif émetteur $NB_1$ émet (étape 11) un signal pilote de référence $SP_1$ dans la première cellule qui lui est associée.

Ce signal pilote de référence $SP_1$ comprend, d'une part, un signal pilote de charge totale $SP_{CT}$ modulant au moins une sous-porteuse de l'ensemble des sous-porteuses orthogonales durant au moins un premier temps symbole appartenant à un premier intervalle de temps symboles $[t_{11} ; t_{12}]$ dédié à la transmission de symboles autres que des symboles de données. Ce premier intervalle de temps symbole $[t_{11} ; t_{12}]$ n'est pas nécessairement au début d'une trame de données.

Le signal pilote de charge totale $SP_{CT}$ a pour fonction de permettre la mesure d'un premier indicateur de qualité, dit « indicateur de qualité en charge totale » et désigné par $CQI_{CT}$, reflétant la charge totale atteinte lorsque toutes les cellules voisines de la première cellule transmettent des données.

Dans un mode de réalisation avantageux, le signal pilote de charge totale $SP_{CT}$ comprend plusieurs symboles pilotes de charge totale, désignés par F1,..., Fi (avec $i \geq 2$) par la suite. Chaque symbole pilote de charge totale Fi module, durant un temps symbole $\tau_{1,i}$ appartenant au premier intervalle $[t_{11} ; t_{12}]$, une sous-porteuse $f_i$ parmi les L sous-porteuses orthogonales utilisées dans le réseau cellulaire.

Ces symboles pilotes de charge totale Fi sont notamment arrangés entre eux de sorte à ne pas moduler une même sous-porteuse durant un même temps symbole.

Ainsi, en prenant l'exemple le plus restrictif où le signal pilote de charge totale $SP_{CT}$ ne comprend que deux symboles pilotes de charge totale F1 et F2, ces symboles F1 et F2 peuvent moduler respectivement deux sous-porteuses distinctes $f_1, f_2$ (avec $f_1 \neq f_2$) durant deux temps symboles distincts $\tau_{1,1}$ et $\tau_{1,2}$ (avec $\tau_{1,1} \neq \tau_{1,2}$), moduler respectivement deux sous-porteuses distinctes $f_1, f_2$ (avec $f_1 \neq f_2$) durant un même temps symbole $\tau_{1,1}$ (où $\tau_{1,1} = \tau_{1,2}$) ou bien moduler la même sous-porteuse $f_1$ (où $f_1 = f_2$) respectivement durant deux temps symboles distincts $\tau_{1,1}$ et $\tau_{1,2}$ (avec $\tau_{1,1} \neq \tau_{1,2}$). Par contre, ces symboles F1 et F2 ne peuvent pas moduler la même sous-porteuse $f_1$ (avec $f_1 = f_2$) pendant le même temps symbole (avec $\tau_{1,1} = \tau_{1,2}$)

Ainsi, le fait d'avoir au moins deux symboles pilote de charge totale F1 et F2 distincts dans un plan temps-fréquence permet d'estimer facilement la puissance du signal utile et la puissance du bruit séparément, et donc d'en déduire le rapport signal sur bruit et interférence $SINR_{CT}$ durant le premier intervalle de temps symboles $[t_{11}; t_{12}]$ avec des techniques connues de l'homme du métier. Bien entendu, plus le nombre de symboles pilotes de charge totale Fi est important, plus précise est la mesure de ce rapport $SINR_{CT}$.

Le signal pilote de référence $SP_1$ comprend, en outre, un signal pilote de charge effective $SP_{CE}$ modulant au moins une sous-porteuse de l'ensemble des sous-porteuses orthogonales durant au moins un deuxième temps symbole appartenant à un deuxième intervalle de temps symboles $[t_{21}; t_{22}]$ dédié à la transmission de symboles de données.

Ce signal pilote de charge effective $SP_{CE}$ a pour fonction de permettre la mesure d'un deuxième indicateur de qualité, dit « indicateur de qualité en charge effective » et désigné par $CQI_{CE}$, reflétant la charge effective due à la transmission de données dans les cellules voisines.

Dans un mode de réalisation avantageux, le signal pilote de charge effective $SP_{CE}$ comprend plusieurs symboles pilotes de charge effective, désignés par A1,...,Aj (avec j$\geq$2) par la suite. Chaque symbole pilote de charge effective Aj module, durant un temps symbole $\tau_{2,j}$ appartenant au deuxième intervalle de temps symboles $[t_{21}; t_{22}]$, une sous-porteuse $f_j$ parmi les L sous-porteuses orthogonales utilisées dans le réseau cellulaire.

Similairement aux symboles pilotes Fi évoqués précédemment, ces symboles pilotes de charge effective Aj sont arrangés entre eux de sorte à ne pas moduler une même sous-porteuse durant un même temps symbole, ceci afin de permettre la déduction du rapport signal sur bruit et interférence $SINR_{CE}$ durant le deuxième intervalle de temps symboles $[t_{21}; t_{22}]$ avec des techniques connues de l'homme du métier, étant entendu que plus le nombre de symboles pilotes de charge effective Aj est important, plus efficace est la mesure de ce rapport $SINR_{CE}$.

Par ailleurs, dans chacune des autres cellules voisines de la première cellule dans le réseau cellulaire, un dispositif émetteur émet un signal pilote interférent (étape 13). Ainsi, dans le réseau illustré à la figure 1, le dispositif émetteur $NB_2$ émet un signal pilote interférent $SP_2$ dans la deuxième cellule et le dispositif émetteur $NB_3$ émet un signal pilote interférent $SP_3$ dans la troisième cellule.

Chacun du (ou des) signal pilote interférent module la (ou les) même sous-porteuse que celle qui est modulée par le signal pilote de charge totale $SP_{CT}$ du signal pilote de référence SP émis par le dispositif, et ce durant le (ou les) même temps symbole durant lequel a lieu cette modulation par le signal pilote de charge totale $SP_{CT}$.

En d'autres termes, dans une représentation selon un bloc bidimensionnel en temps et fréquence, chaque signal pilote interférent $SP_2$, $SP_3$,... comprend des symboles interférent placés à la même position en temps-fréquence $(f_i; \tau_{1,i})$ que le(s) symbole(s) pilote(s) de charge totale Fi du signal pilote de charge totale $SP_{CT}$.

Pour ce faire, le signal pilote interférent $SP_2$ comprend, pour chaque symbole pilote de charge totale Fi appartenant au signal pilote de charge totale $SP_{CT}$, un symbole pilote interférent Fi' modulant la même sous-porteuse $f_i$ que le symbole Fi, durant le même temps symbole $\tau_{1,i}$.

Ceci permet de garantir que, durant ce premier intervalle de temps symboles $[t_{11}, t_{42}]$, l'ensemble des cellules voisines interfèrent, sur les mêmes sous-porteuses $f_i$, et durant les mêmes temps symboles $\tau_{1,i}$, les symbole pilotes de charge totale Fi du signal pilote de charge totale $SP_{CT}$.

A l'inverse, le signal pilote interférent des cellules voisines est avantageusement arrangé pour ne pas contenir de symbole interférent modulant une même sous-porteuse, durant un même temps symbole, qu'un symbole pilote de charge effective Aj du signal pilote de charge effective $SP_{CE}$.

En d'autres termes, toujours dans la représentation selon un bloc bidimensionnel en temps et fréquence, chaque signal pilote interférent $SP_2$, $SP_3$,... ne comprend pas de symbole pilote interférent placé à la même position $(f_j; \tau_{2,j})$ qu'un symbole pilote de charge effective Aj du signal pilote de charge effective $SP_{CE}$. Il en est ainsi pour tous les symboles pilotes de charge effective A1,...,Aj présents dans le signal pilote de charge effective $SP_{CE}$.

Ceci permet de s'assurer qu'aucun symbole pilote d'un signal interférent n'interfère les symboles pilotes de charge effective $A_j$, qui ne peuvent donc être interférés que par des symboles de données, ce qui permet d'obtenir une mesure du rapport $SINR_{CE}$ la plus précise possible.

On procède ensuite à la mesure (étape 20), par le dispositif récepteur M situé dans la première cellule, de l'indicateur de qualité en charge totale $CQI_{CT}$ et de l'indicateur de qualité en charge effective $CQI_{CE}$.

En particulier, l'indicateur de qualité en charge totale $CQI_{CT}$ est mesuré au moyen des symboles pilotes de charge totale Fi du signal pilote de charge totale $SP_{CT}$, en mesurant le rapport signal sur bruit et interférence $SINR_{CT}$

associé à l'ensemble des symbole pilotes de charge totale Fi de ce signal pilote $SP_{CT}$ et en déduisant l'indicateur de qualité correspondant à ce rapport signal sur bruit et interférence $SINR_{CT}$, similairement à ce qui est fait pour un indicateur de qualité de canal CQI traditionnel.

De même, l'indicateur de qualité du canal en charge effective $CQI_{CE}$ est mesuré au moyen des symboles pilotes de charge effective Aj du signal pilote de charge effective $SP_{CE}$, en mesurant le rapport signal sur bruit et interférence $SINR_{CE}$ associé à l'ensemble de ces symboles pilotes de charge effective Aj de ce signal $SP_{CE}$ et en déduisant l'indicateur de qualité correspondant à ce rapport signal sur bruit et interférence $SINR_{CE}$, similairement à ce qui est fait pour un indicateur de qualité de canal CQI traditionnel.

Une fois les indicateurs de qualité $CQI_{CT}$ et $CQI_{CE}$ mesurés, on procède alors à la détermination (étape 30) de l'indicateur de qualité CQI du canal de transmission radio, à partir de ces indicateurs de qualité $CQI_{CT}$ et $CQI_{CE}$.

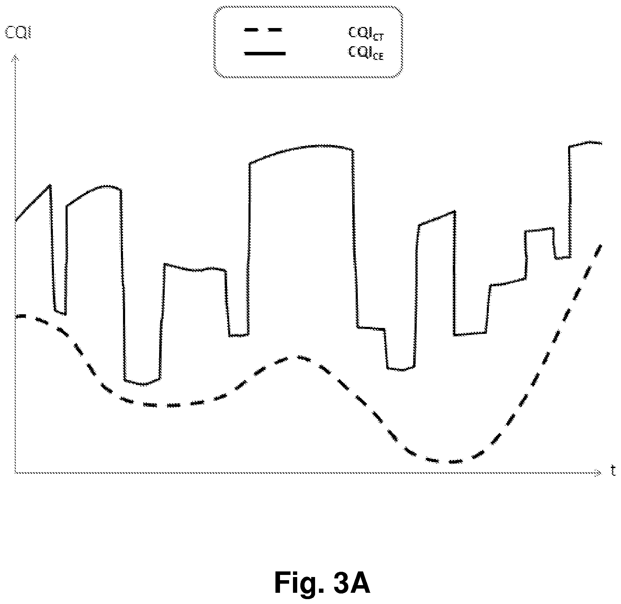

Cette étape 30 de détermination de l'indicateur de qualité CQI, à partir d'un indicateur de qualité en charge totale $CQI_{CT}$ et d'un indicateur de qualité en charge effective $CQI_{CE}$, peut être réalisée selon différents modes de réalisation illustrés sur les figures 3A à 3E.

Afin de bien comprendre comment l'indicateur de qualité du canal CQI est obtenu à partir des indicateurs de qualité $CQI_{CT}$ et $CQI_{CE}$, on se réfère tout d'abord à la **figure 3A** qui illustre les courbes respectives de ces indicateurs de qualité $CQI_{CT}$ et $CQI_{CE}$, mesurés sur une certaine période de temps.

Ces courbes sont obtenues en effectuant l'étape 20 de mesure de ces indicateurs de qualité régulièrement, par exemple avec une période multiple de la trame du système. Ainsi, si les trames de données transmises ont une durée de 1 ms, l'étape 20 de mesure des indicateurs $CQI_{CT}$ et $CQI_{CE}$ peut être réalisée toutes les k millisecondes, k étant un nombre entier supérieur à 1.

Sur cette figure 3A, la courbe de l'indicateur de qualité en charge totale $CQI_{CT}$ reflète directement l'évolution des conditions radio affectant le dispositif récepteur M, indépendamment de l'activité sur le réseau.

Pour sa part, la courbe de l'indicateur de qualité en charge effective $CQI_{CE}$ reflète indirectement une information sur l'impact de l'activité sur le réseau sur l'évolution de l'indicateur de qualité du canal de communication radio CQI, indépendamment des conditions radio affectant le dispositif récepteur M.

Les deux informations décorrélées fournies par ces indicateurs de $CQI_{CT}$ et $CQI_{CE}$ peuvent alors être utilisées pour obtenir un indicateur de qualité de canal CQI plus précis que les indicateurs habituellement obtenus dans l'état de la technique.

Dans un premier mode de réalisation de cette étape 30 de détermination de l'indicateur de qualité CQI, on considère principalement l'activité de charge maximum observée sur le réseau cellulaire, ce qui offre une solution conservative, simple et efficace pour calculer cet indicateur CQI.

Pour ce faire, on calcule la valeur minimale $Min[\Delta(CQI_{CE}-CQI_{CT})]$ de la fonction différence $\Delta(CQI_{CE}-CQI_{CT})$ entre l'indicateur de qualité en charge effective $CQI_{CE}$ et l'indicateur de qualité en charge totale $CQI_{CT}$, sur une fenêtre temporelle glissante de durée T , T étant un multiple de la durée des trames transmises dans le réseau (par exemple si une trame dure 1ms, comme c'est le cas en 3GPP LTE, ces mesures peuvent être effectuées toutes les k millisecondes, k étant un entier supérieur ou égal à 1).

En particulier, pour un instant n donné :

$$Min[\Delta(CQI_{CE}-CQI_{CT})](n)=Minimum\{Min[\Delta(CQI_{CE}-CQI_{CT})](n-1),CQI_{CE}(n)-CQI_{CT}(n)\}.$$

Dans ce premier mode de réalisation, l'indicateur de qualité du canal de transmission radio $CQI_1$ est alors déterminé, à un instant n donné, comme étant la somme de l'indicateur de qualité du canal en charge totale $CQI_{CT}$ et de cette valeur minimale.

En d'autres termes, $CQI_1(n)= CQI_{CT}(n) + Min[\Delta(CQI_{CE}-CQI_{CT})](n)$

Cet indicateur de qualité du canal de transmission radio $CQI_1$ peut alors être utilisé par le dispositif émetteur $NB_1$ pour adapter le débit de transmission sur la voie descendante, selon des techniques connue de l'homme du métier qui ne seront pas détaillées ici.

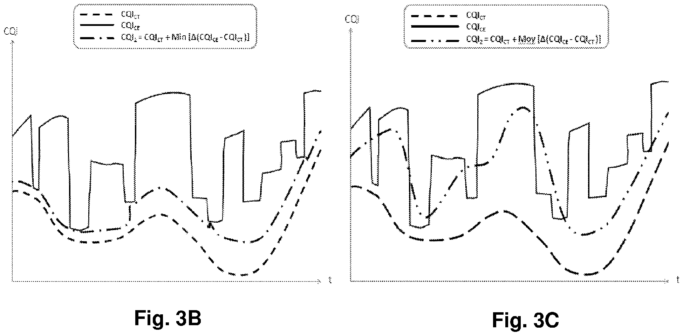

La **figure 3B** illustre l'évolution temporelle de l'indicateur de qualité du canal de transmission radio $CQI_1$ obtenu avec ce premier mode de réalisation de cette étape 30 de détermination.

En particulier, on note que la courbe de cet indicateur $CQI_1$ reste en permanence comprise entre les deux courbes des indicateurs $CQI_{CE}$ et $CQI_{CT}$ sur la fenêtre considérée.

Cet indicateur $CQI_1$ tient compte aussi bien de l'évolution instantanée des conditions radio (au travers de sa composante $CQI_{CT}$) que de l'évolution moyenne des maximums d'activité sur le réseau (au travers de sa composante $Min[\Delta(CQI_{CE}-CQI_{CT})]$).

Dans un deuxième mode de réalisation de l'étape 30 de détermination de l'indicateur de qualité CQI, on considère principalement la moyenne de la différence entre une activité de charge maximum et une activité de charge effective telles qu'observées sur le réseau cellulaire, ce qui offre une solution opportuniste et simple pour calculer cet indicateur CQI.

Pour ce faire, on calcule la valeur moyenne Moy[$\Delta$(CQI$_{CE}$-CQI$_{CT}$)] de la fonction différence $\Delta$(CQI$_{CE}$-CQI$_{CT}$) entre l'indicateur de qualité en charge effective CQI$_{CE}$ et l'indicateur de qualité en charge totale CQI$_{CT}$, sur une fenêtre temporelle glissante T telle que définie précédemment.

$$\mathrm{Moy}[\Delta(\mathrm{CQI}_{CE}\text{-}\mathrm{CQI}_{CT})](n)=\mathrm{Moyenne}\{\mathrm{Moy}[\Delta(\mathrm{CQI}_{CE}\text{-}\mathrm{CQI}_{CT})](n\text{-}1),\mathrm{CQI}_{CE}(n)\text{-}\mathrm{CQI}_{CT}(n)\}.$$

Dans ce deuxième mode de réalisation, l'indicateur de qualité du canal CQI$_2$ est alors déterminé, à un instant n donné, comme étant la somme de l'indicateur de qualité du canal en charge totale CQI$_{CT}$ et de cette valeur moyenne.

En d'autres termes, CQI$_2$(n)=CQI$_{CT}$ (n) + Moy[$\Delta$(CQI$_{CE}$-CQI$_{CT}$)]

Cet indicateur de qualité du canal de transmission radio CQI$_2$ peut alors être utilisé par le dispositif émetteur NB$_1$ pour adapter le débit de transmission sur la voie descendante.

La **figure 3C** illustre l'évolution temporelle de l'indicateur de qualité du canal CQI$_2$ obtenu avec ce deuxième mode de réalisation de cette étape 30 de détermination.

En particulier, on note que la courbe de cet indicateur CQI$_2$ peut dépasser à certains moments la courbe de l'indicateur de qualité en charge effective CQI$_{CE}$ sur la fenêtre considérée, ce qui revient à surestimer la qualité du canal radio à ces moments.

Cet indicateur CQI$_2$ tient compte aussi bien de l'évolution instantanée des conditions radio (au travers de sa composante CQI$_{CT}$) que de l'évolution moyenne des de l'activité sur le réseau (au travers de sa composante Moy[$\Delta$(CQI$_{CE}$-CQI$_{CT}$)]).

Enfin, dans un troisième mode de réalisation de l'étape 30 de détermination de l'indicateur de qualité CQI, on considère statistiquement la différence entre une activité de charge maximum et une activité de charge effective telles qu'observées sur le réseau cellulaire, ce qui offre une solution plus efficace moyennant une complexité de calcul accrue.

Pour ce faire, on calcule la valeur minimale Min[$\Delta$(CQI$_{CE}$-CQI$_{CT}$)], la valeur moyenne Moy[$\Delta$(CQI$_{CE}$-CQI$_{CT}$)] et la valeur maximale Max[$\Delta$(CQI$_{CE}$-CQI$_{CT}$)] de la fonction différence $\Delta$(CQI$_{CE}$-CQI$_{CT}$) entre l'indicateur de qualité en charge effective CQI$_{CE}$ et l'indicateur de qualité en charge totale CQI$_{CT}$, sur une fenêtre temporelle glissante T telle que définie précédemment.

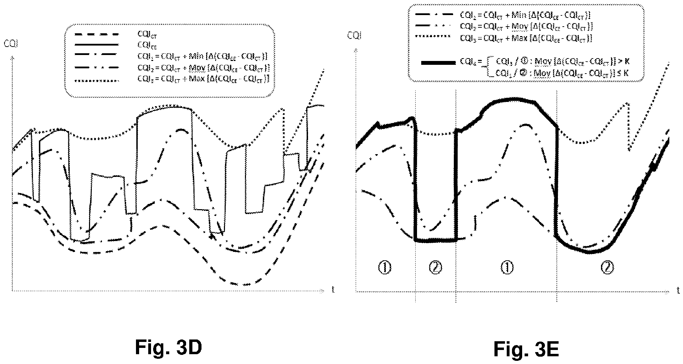

La **figure 3D** illustre l'évolution temporelle de ces trois valeurs obtenues avec ce troisième mode de réalisation de cette étape 30 de détermination.

En particulier, l'évolution temporelle de la valeur minimale Min[$\Delta$(CQI$_{CE}$-CQI$_{CT}$)] et de la valeur moyenne Moy[$\Delta$(CQI$_{CE}$-CQI$_{CT}$)] est reflétée respectivement par les courbes des indicateurs de qualité CQ$_1$ et CQ$_2$, déjà illustrée respectivement sur les figures 3B et 3C.

L'évolution temporelle de la valeur de la valeur maximale Max[$\Delta$(CQI$_{CE}$-CQI$_{CT}$)] est, elle, reflétée par la courbe de l'indicateur de qualité CQ$_3$ tel que, pour instant n donné :

$$\mathrm{CQI}_3(n) = \mathrm{CQI}_{CT}(n) + \mathrm{Max}[\Delta(\mathrm{CQI}_{CE}\text{-}\mathrm{CQI}_{CT})](n).$$

Dans ce troisième mode de réalisation, l'indicateur CQI$_4$ de qualité du canal prend alors, à un instant n donné, soit la valeur de l'indicateur de qualité CQ$_1$, soit la valeur de l'indicateur de qualité CQ$_3$, et ce en fonction de la comparaison de l'indicateur de qualité CQ$_2$ avec un seuil paramétrable K, qui peut être par exemple à un pourcentage donné de la différence entre la valeur maximale Max[$\Delta$(CQI$_{CE}$-CQI$_{CT}$)] et la valeur minimale Min[$\Delta$(CQI$_{CE}$-CQI$_{CT}$)] à cet instant n.

A titre d'exemple, à l'instant n, ce seuil peut prendre la valeur suivante :

$$K(n)=50\%*(\mathrm{Max}[\Delta(\mathrm{CQI}_{CE}\text{-}\mathrm{CQI}_{CT})]\text{-} \mathrm{Min}[\Delta(\mathrm{CQI}_{CE}\text{-}\mathrm{CQI}_{CT})]).$$

En particulier, si l'indicateur de qualité CQ$_2$ est supérieur à ce seuil K à un instant n donné, alors l'indicateur de qualité CQI$_4$ est déterminé selon la formule suivante : CQI$_4$(n) = CQI$_3$(n) = CQI$_{CT}$(n) + Max[$\Delta$(CQI$_{CE}$-CQI$_{CT}$)](n).

Par contre, dès que l'indicateur de qualité CQ$_2$ est inférieur ou égale à ce seuil K, alors l'indicateur de qualité CQI$_4$ est déterminé selon la formule conservative suivante : CQI$_4$(n) = CQI$_1$(n) = CQI$_{CT}$(n) + Min[$\Delta$(CQI$_{CE}$-CQI$_{CT}$)](n) qui correspond au premier mode de réalisation discuté précédemment.

La **figure 3E** illustre l'évolution temporelle de l'indicateur de qualité du canal de transmission radio CQI$_4$ obtenu avec ce troisième mode de réalisation de cette étape 30 de détermination.

En particulier, il est notable sur cette figure que l'indicateur de qualité CQI$_4$ passe dans un premier état où il correspond à l'indicateur de qualité CQI$_1$, dans une situation ① correspondant à des instants où la valeur moyenne Moy[$\Delta$(CQI$_{CE}$-CQI$_{CT}$)] dépasse le seuil K, tandis que cet indicateur de qualité CQI$_4$ passe dans un deuxième état plus conservateur où il correspond à l'indicateur de qualité $CQI_3$, dans une situation ② correspondant à des instants où la valeur moyenne $Moy[\Delta(CQI_{CE}-CQI_{CT})]$ est inférieure, ou égale, à ce seuil K.

Cet indicateur $CQI_4$ tient donc compte aussi bien de l'évolution instantanée des conditions radio au travers de sa composante $CQI_{CT}$, que de la probabilité d'avoir une forte ou faible activité sur le réseau comparé à un seuil d'activité référence, au travers d'une deuxième composante qui peut être soit la valeur minimale $Min[\Delta(CQI_{CE}-CQI_{CT})]$, soit la valeur maximale $Max[\Delta(CQI_{CE}-CQI_{CT})]$.

La détermination de l'indicateur de qualité CQI peut être réalisée au niveau du dispositif récepteur M ou au niveau du dispositif émetteur $NB_1$, selon les contraintes et le contexte d'application de la présente invention.

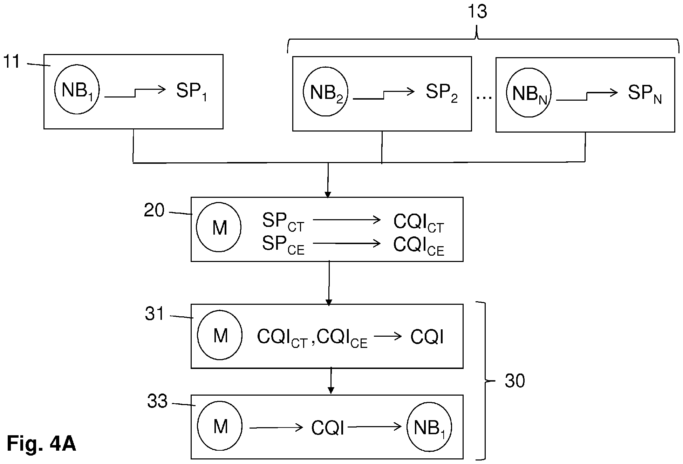

La **figure 4A** illustre ainsi les étapes d'un procédé d'établissement de l'indicateur de qualité CQI selon un premier mode de réalisation de la présente invention où cette détermination est réalisée au niveau du dispositif récepteur M.

Dans ce premier mode de réalisation, l'indicateur de qualité CQI du canal de transmission radio est déduit par le dispositif récepteur M à partir des indicateurs de qualité $CQI_{CT}$ et $CQI_{CE}$ (étape 31), puis transmis au premier dispositif émetteur $NB_1$ (étape 33), afin que ce dernier puisse adapter le débit de transmission en fonction de cet indicateur CQI.

Ce premier mode de réalisation est avantageux en ce qu'il est transparent pour le dispositif émetteur $NB_1$, puisque ce dernier reçoit un indicateur de qualité de canal CQI similaire aux indicateurs utilisés habituellement dans l'état de la technique, et peut donc être employé avec des stations de base traditionnelles, sans modification du processus d'adaptation de lien de ces dernières.

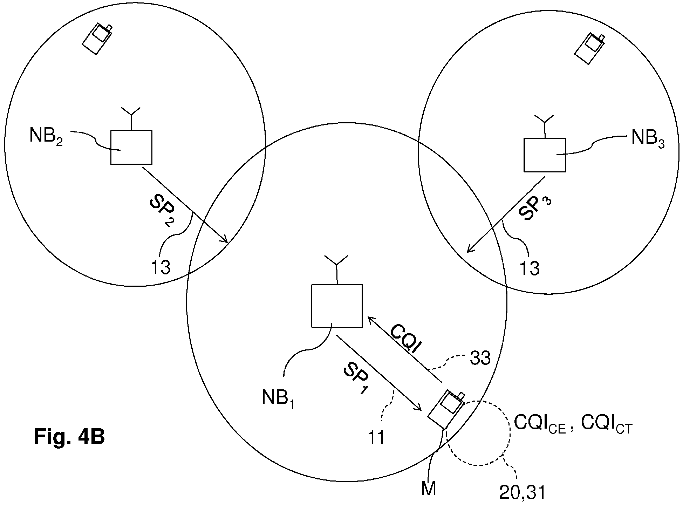

La **figure 4B** illustre le réseau cellulaire dans lequel est mis en oeuvre le procédé selon le premier mode de réalisation de la présente invention.

On voit bien sur cette figure que la mesure des indicateurs de qualité $CQI_{CT}$ et $CQI_{CE}$ (étape 20) et la déduction de l'indicateur de qualité CQI à partir de ces indicateurs (étape 31) sont mises en oeuvre au niveau du dispositif récepteur M.

Pour ce faire, le dispositif récepteur M comprend un module récepteur (une antenne radio par exemple) apte à recevoir le signal pilote de référence $SP_1$ émis par la station de base $NB_1$, un module de traitement (comprenant typiquement un processeur associé à une mémoire vive) configuré pour mettre en oeuvre les étapes de mesure des indicateurs de qualité en charge totale $CQI_{CT}$ et en charge effective $CQI_{CE}$ et de détermination de l'indicateur de qualité du canal CQI à partir de ces indicateurs $CQI_{CT}$ et $CQI_{CE}$, telles que décrites précédemment, et un module émetteur (une antenne radio par exemple) pour émettre l'indicateur de qualité du canal CQI vers la station de base $NB_1$.

La station de base $NB_1$, quant à elle, comprend un module émetteur (une antenne radio typiquement) configuré pour émettre, vers le terminal mobile M, le signal pilote de référence $SP_1$ et un module récepteur (une antenne radio typiquement) apte à recevoir en retour l'indicateur de qualité du canal CQI calculé et émis par le terminal mobile M. Les autres stations de base $NB_2$ et $NB_3$, pour leur part, comprennent chacune un module émetteur (une antenne radio typiquement) configuré pour émettre, dans leurs cellules respectives, un signal pilote interférent $SP_2$ tel que décrit ci-avant.

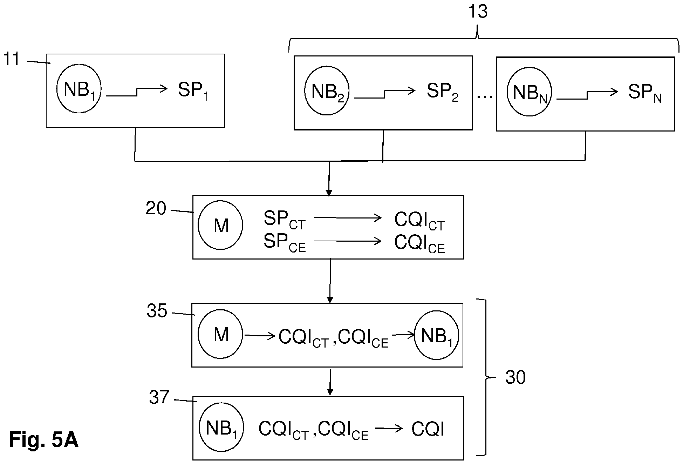

La **figure 5A** illustre les étapes d'un procédé d'établissement de l'indicateur de qualité CQI selon un deuxième mode de réalisation de la présente invention où cette détermination est réalisée, cette fois-ci, au niveau du dispositif émetteur $NB_1$.

Dans ce deuxième mode de réalisation, les indicateurs de qualité $CQI_{CT}$ et $CQI_{CE}$ sont d'abord transmis (étape 35) par le dispositif récepteur M vers le dispositif émetteur $NB_1$, avant que ce dispositif émetteur $NB_1$ ne procède à la déduction de l'indicateur de qualité CQI à partir de ces indicateurs de qualité $CQI_{CT}$ et $CQI_{CE}$ (étape 37).

Ce deuxième mode de réalisation est particulièrement avantageux en ce sens qu'il permet de limiter les ressources de calcul nécessaires au niveau du dispositif récepteur M, puisque le calcul de l'indicateur de qualité CQI est effectué cette fois au niveau du dispositif émetteur $NB_1$ qui dispose habituellement de plus grandes capacités de calcul (c'est en particulier le cas d'un réseau avec des stations de base communiquant avec des terminaux portables de type téléphone mobile).

Par ailleurs, ce mode de réalisation présente l'avantage d'être plus évolutif dans la mesure où il est plus facile pour les opérateurs de mettre à jour les dispositifs émetteurs, appartenant à leurs réseaux, que les dispositifs récepteurs, beaucoup plus nombreux et inhomogènes.

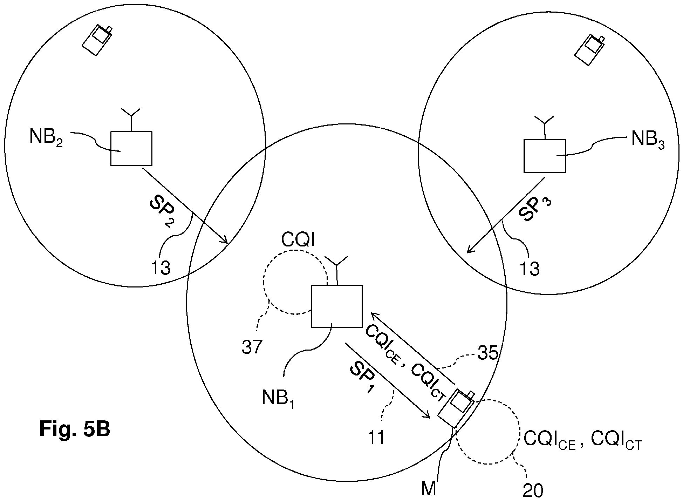

La **figure 5B** illustre le réseau cellulaire dans lequel est mis en oeuvre le procédé selon le deuxième mode de réalisation de la présente invention.

On voit bien sur cette figure que seule la mesure des indicateurs de qualité $CQI_{CT}$ et $CQI_{CE}$ est effectuée au niveau du dispositif récepteur M (étape 20), la déduction de l'indicateur de qualité CQI à partir de ces indicateurs étant effectuée au niveau du dispositif émetteur $NB_1$ (étape 37).

Pour ce faire, la station de base $NB_1$ comprend un module émetteur (une antenne radio typiquement) configuré pour émettre, vers le terminal mobile M, le signal pilote de référence $SP_1$ et un module récepteur (une antenne radio typiquement) apte à recevoir en retour les indicateurs de qualité $CQI_{CT}$ et $CQI_{CE}$ calculés et émis par le terminal mobile M. La station de base $NB_1$ comprend en outre un module de traitement (comprenant typiquement un processeur associé à une mémoire vive) configuré pour mettre en oeuvre l'étape de détermination de l'indicateur de qualité du canal CQI à partir de ces indicateurs $CQI_{CT}$ et $CQI_{CE}$. Les autres stations de base $NB_2$ et $NB_3$, pour leur part, comprennent chacune un module émetteur (une antenne radio typiquement) configuré pour émettre, dans leurs cellules respectives, un signal pilote interférent $SP_2$ tel que décrit ci-avant.

Le dispositif récepteur M comprend, quant à lui, un module récepteur (une antenne radio par exemple) apte à recevoir le signal pilote de référence $SP_1$ émis par la station de base $NB_1$, un module de traitement (comprenant typiquement un processeur associé à une mémoire vive) configuré pour mettre en oeuvre l'étape de mesure des indicateurs de qualité en charge totale $CQI_{CT}$ et en charge effective $CQI_{CE}$ telle que décrite précédemment, et un module émetteur (une antenne radio par exemple) pour émettre ces l'indicateurs de qualité $CQI_{CT}$ et $CQI_{CE}$ vers la station de base $NB_1$.

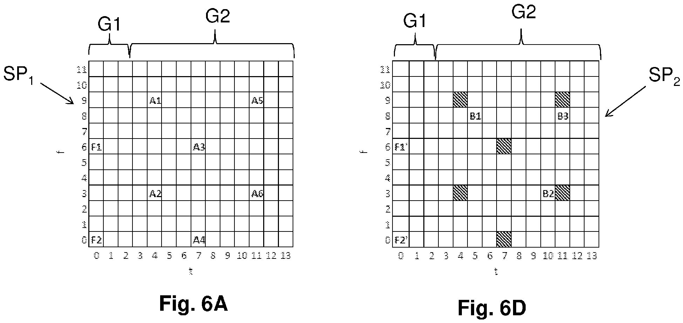

On se réfère maintenant aux figures 6A à 6D qui illustrent un signal pilote de référence $SP_1$, tel qu'émis par un premier dispositif émetteur situé dans une première cellule d'un réseau cellulaire, ainsi qu'un signal pilote interférent $SP_2$, tel qu'émis par un deuxième dispositif émetteur situé dans une cellule voisine de la première cellule dans le réseau cellulaire, représentés selon un même bloc bidimensionnel en temps et fréquence.

En particulier, la **figure 6A** illustre un signal pilote de référence $SP_1$ émis par le premier dispositif émetteur $NB_1$ situé dans la première cellule du réseau cellulaire illustré à la figure 1.

Ce signal pilote est représenté selon un bloc bidimensionnel en temps et en fréquence défini par 12 sous-porteuses $f_0$ à $f_{11}$ (axe des ordonnées) et 14 intervalles de temps symboles de (t=0) à (t=13) (axe des abscisses).

Ce signal pilote de référence $SP_1$ comprend en particulier deux symboles pilotes de charge totale $F_1$ et $F_2$, ainsi que six symboles pilotes de charge effective $A_1$ à $A_6$, dans cet exemple non-limitatif.

Les symboles pilotes de charge totale $F_1,F_2$ sont situé dans une zone G1 du bloc bidimensionnel qui est dédiée à la transmission de symboles autres que des symboles de données proprement dites, comme par exemple des symboles de signalisation ou de contrôle. Ainsi, ces symboles pilotes de charge totale $F_1,F_2$ ne peuvent pas être interféré par des symboles de données émis dans d'autres cellules voisines.

Cette zone G1 correspond ici typiquement au préambule réservé à des symboles de contrôle. Ainsi, dans un réseau selon le standard 3GPP LTE, cette zone G1 correspond au préambule réservé aux symboles dits PDCCH transmis durant un premier intervalle $[t_{11},t_{12}]$ couvrant les 1, 2 ou 3 premiers temps symboles (suivant la configuration du PDCCH) des trames transmises par les dispositif émetteurs $NB_1,NB_2$, etc.

Les symboles pilotes de charge effective $A_1$ à $A_6$, quant à eux, sont placés dans une zone G2 du bloc bidimensionnel en temps et fréquence qui est dédiée à la transmission de symboles de données proprement dites. Ainsi, ces symboles pilotes de charge effective ne peuvent être interférés que par des symboles de données émis dans d'autres cellules voisines.

Cette zone G2 correspond ici typiquement au bloc ressource, ou champ « payload », réservé aux symboles de données durant les dernier temps symboles des trames transmises par les dispositif émetteurs $NB_1,NB_2$, etc.

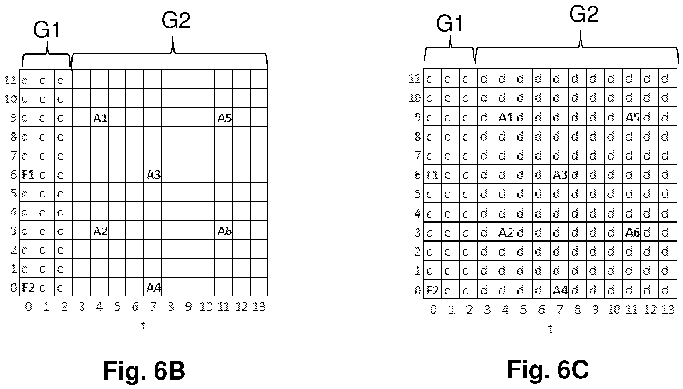

La **figure 6B** illustre le bloc bidimensionnel en temps et fréquence lorsque la zone G1 est complètement chargée et que le bloc ressource G2 est vide. Dans une telle situation, la zone G1 de ce bloc est complètement remplie de symboles PDCCH (désignés par « c »), à l'exception des symboles pilotes de charge totale $F_1$ et F2 appartenant au signal pilote de charge totale $SP_{CT}$. Dans la zone G2, seuls les symboles pilotes de charge effective A1 à A6 apparaissent.

La **figure 6C** illustre le bloc bidimensionnel en temps et fréquence lorsque la zone G1 est complètement chargée et que le bloc ressource G2 est également complètement chargé. Dans une telle situation, la zone G1 de ce bloc bidimensionnel est complètement remplie de symboles PDCCH (désignés par « c »), à l'exception des symboles pilotes de charge totale F1 et F2, et le bloc ressource G2 est complètement rempli de symboles de données (désigné par « d »), à l'exception des symboles pilotes de charge effective A1 à A6 appartenant au signal pilote de charge effective $SP_{CE}$.

La **figure 6D** illustre un signal pilote interférent $SP_2$ émis par le deuxième dispositif émetteur $NB_2$ situé dans la deuxième cellule du réseau cellulaire illustré à la figure 1.

Ce signal pilote interférent $SP_2$ comprend deux symboles pilotes interférents F'1,F'2, situés dans la zone G1 du bloc bidimensionnel en temps et en fréquence, ainsi que trois autres symboles interférents B1 à B3 situés dans la zone G2 du bloc bidimensionnel en temps et en fréquence.

Les symboles pilotes interférent F'1, F'2 sont en particulier placés à la même position, dans ce bloc bidimensionnel, que les symboles pilotes de charge totale F1,F2 de la Figure 6A du signal pilote de référence $SP_1$ émis par le dispositif émetteur $NB_1$, afin d'interférer ce signal pilote de référence. En d'autres termes, le dispositif émetteur $NB_2$ émet un signal pilote interférent dans lequel des symboles F'1 et F'2 modulent les mêmes sous-porteuses (ici, la première et la septième sous-porteuses $f_0$ et $f_6$) que celles qui sont modulées par les symboles F1 et F2, dans le signal pilote de référence $SP_1$, et ce durant le même premier temps symbole (ici, le premier temps symbole du bloc bidimensionnel pour t=0).

Ces symboles pilotes interférents F'1 et F'2 peuvent être utilisé pour permettre au dispositif émetteur $NB_2$ de mesurer un indicateur de qualité de charge totale $CQI_{CT2}$ pour la deuxième cellule, de façon similaire à ce qui est réalisé par le dispositif émetteur $NB_1$, auquel cas ces symboles pilotes interférents peuvent correspondre alors à des symboles pilotes de charge totale appartenant à un signal pilote de charge totale $SP_{CT2}$, utilisé dans la deuxième cellule, à la condition que ces symbole F'1,F'2 soit connus d'un dispositif récepteur présent dans la deuxième cellule afin de permettre la détermination de cet indicateur de qualité de charge totale $CQI_{CT2}$ par ce dispositif récepteur.

Les trois autres symboles interférents B1 à B3 sont placés, a contrario, à des positions du bloc bidimensionnel ne correspondant pas aux positions des symboles pilotes de charge effective A1 à A6 du signal pilote de référence $SP_1$. Les positions de ces symboles A1 à A6 sont rappelées par des cases grisées sur la figure 6D.

Il est en effet particulièrement avantageux que les positions de ces symboles pilotes de charge effective A1 à A6 soient gardées libres de tout symbole pilote interférent, dans les signaux pilotes interférents émis dans les cellules voisines, afin que seuls les symboles de données émis dans les cellules voisines puissent interférer ces symboles pilotes de charge effective A1 à A6 dans la cellule d'intérêt, et donc de mesure un indicateur de qualité de charge effective $CQI_{CE}$ dans la cellule d'intérêt reflétant le plus précisément possible la charge effective en termes de données transmises dans les cellules voisines.

Ces symboles interférents B1 à B3 peuvent également être utilisés, au sein de la deuxième cellule, pour permettre au dispositif émetteur $NB_2$ de mesurer un indicateur de qualité de charge effective $CQI_{CE2}$ pour la deuxième cellule, de façon similaire à ce qui est réalisé par le dispositif émetteur $NB_1$, auquel cas ces symboles interférents peuvent correspondre à des symboles pilotes de charge effective appartenant à un signal pilote de charge effective $SP_{CE2}$, du point de vue de la deuxième cellule, à condition que ces symboles B1 à B3 soient connus d'un dispositif récepteur présent dans la deuxième cellule, afin de permettre la détermination de cet indicateur de qualité de charge effective $CQI_{CE2}$ par ce dispositif récepteur.

On se réfère maintenant à un mode de réalisation particulier dans lequel les dispositifs émetteurs $NB_j$ de cellules voisines émettent des signaux pilotes présentant un même ensemble de symboles pilotes arrangés selon un même motif, dans un bloc bidimensionnel en temps et en fréquence, mais décalés en fréquence d'un signal pilote à l'autre.

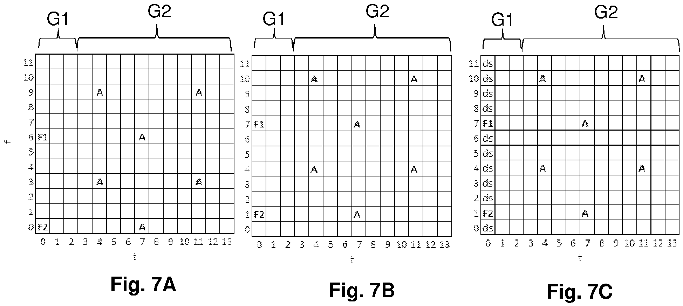

Cet autre mode de réalisation est illustré sur les figures 7A à 7C.

En particulier, la **figure 7A** illustre à nouveau le signal pilote de référence $SP_1$, émis par le premier dispositif émetteur $NB_1$ situé dans la première cellule du réseau cellulaire illustré à la figure 1, tel que déjà illustré à la figure 6A. Les symboles pilotes F1,F2 et A appartenant à ce signal $SP_1$ sont arrangés selon un motif prédéterminé dans le bloc bidimensionnel en temps et en fréquence.

La **figure 7B** illustre un signal pilote interférent $SP_2$, émis par le deuxième dispositif émetteur $NB_2$ situé dans la deuxième cellule du réseau cellulaire illustré à la figure 1, selon cet autre mode de réalisation.

Dans ce deuxième signal pilote $SP_2$, les symboles pilotes F1,F2 et A ont un agencement respectant le même motif, dans le bloc bidimensionnel, que les symboles pilotes du premier signal pilote $SP_1$, moyennant un décalage en fréquence d'une sous-porteuse.

Par exemple, des symboles pilotes de charge effective A modulent, durant le cinquième temps symbole du bloc bidimensionnel, les cinquième et onzième sous-porteuses orthogonales $f_4$ et $f_{10}$ dans le signal pilote $SP_2$ alors que des symboles pilotes de charge effective A modulent, durant ce même cinquième temps symbole du bloc bidimensionnel, les quatrième et dixième sous-porteuses orthogonales $f_3$ et $f_9$ dans le signal pilote $SP_1$.

Ce motif de symboles pilotes peut être ainsi repris dans chaque signal pilote $SP_j$ émis par chaque dispositif émetteur $NB_j$ d'un groupe de cellules voisines, en décalant à chaque fois les symboles pilotes d'une sous-porteuse.

Un tel schéma de signaux pilotes peut notamment correspondre aux signaux de référence émis dans un réseau cellulaire de type LTE (pour Long Term Evolution).

Avec l'utilisation de ces motifs décalés en fréquence, on s'assure du fait que, pour chaque symbole pilote d'un signal pilote $SP_j$, aucun autre symbole pilote d'un autre signal pilote $SP_{k,k\neq j}$ d'une cellule voisine n'interfère avec ce signal pilote. Les symboles pilotes de charge effective A, situés dans la zone G2 du bloc bidimensionnel, ne peuvent donc être interférés que par des symboles de données, ce qui permet d'obtenir un indicateur de qualité de charge effective $CQI_{CE}$ plus fiable.

Afin de provoquer l'interférence sur le signal pilote de charge totale $SP_{CT}$ nécessaire à l'obtention d'un indicateur de qualité de charge totale $CQI_{CT}$ fiable, des symboles pilotes complémentaires (désignés par « ds ») sont ajoutés aux signaux pilotes de charge totale Fi dans chaque signal pilote $SP_j$ du groupe de cellule voisines. De tels symboles pilotes complémentaires peuvent être des symboles de bourrage, non nuls, de tout type.

En particulier, ces symboles pilotes complémentaires ds modulent, durant le(s) temps symbole(s) où un symbole pilote de charge totale Fi module une des sous-porteuses orthogonales, l'ensemble des autres sous-porteuses, parmi les L sous-porteuses orthogonales, qui ne sont modulées par aucun symbole.

Cela permet de garantir que, lors d'un temps symbole pour lequel les signaux pilotes $SP_j$ d'un groupe de cellules voisines comprennent des symboles pilotes de charge totale Fi, chacune des N sous-porteuses orthogonales est modulée par un symbole. Ainsi, pour une cellule donnée, chaque symbole pilote de charge totale Fi est alors interféré par l'ensemble des signaux pilotes des cellules voisines de cette cellule, ce qui permet d'obtenir un indicateur de qualité de charge totale $CQI_{CT}$ fiable.

La **figure 7C** illustre un signal pilote interférent $SP_2$ comprenant de tels symboles pilotes complémentaires.

Ce signal pilote interférent $SP_2$ comprend en effet deux symboles pilotes de charge totale F1 et F2 modulant respectivement la huitième sous-porteuse $f_7$ et la deuxième sous-porteuse $f_1$ durant le premier temps symbole (t=0) du bloc bidimensionnel. Ce signal pilote interférent $SP_2$ comprend en outre des symboles pilotes complémentaires ds modulant les autres sous-porteuses $f_0$, $f_2$ à $f_6$ et $f_8$ à $f_{11}$ durant ce même premier temps symbole.

Ce schéma de remplissage, pour un temps symbole donné de la zone G1 du bloc dimensionnel, peut être répété pour l'ensemble des signaux pilotes $SP_1$,$SP_2$,... afin de garantir l'obtention d'un indicateur de qualité de charge totale $CQI_{CT}$ fiable.

On se réfère maintenant à un autre mode particulier de réalisation, similaire au précédent mais se distinguant cependant de celui-ci en ce que les symboles pilotes de charge totale sont modulés durant des premiers temps symboles distincts.

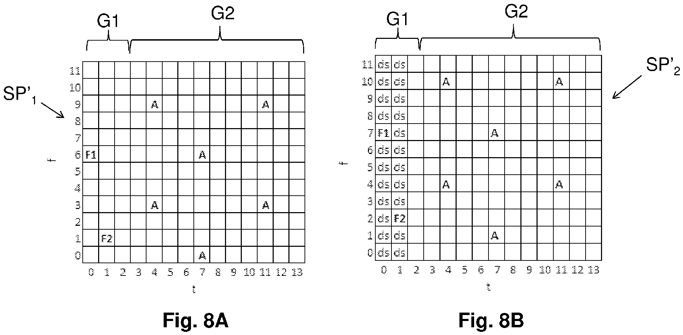

La **figure 8A** illustre un signal pilote de référence $SP_1$' selon cet autre mode particulier de réalisation, tel qu'émis par le premier dispositif émetteur $NB_1$ situé dans la première cellule du réseau cellulaire illustré à la figure 1.

En particulier, outre des symboles de charge effective A, le signal pilote de référence $SP_1$' comprend un premier symbole pilote de charge totale F1 modulant la septième sous-porteuse $f_6$ durant un premier temps symbole (t=0) et un deuxième symbole pilote de charge totale F2 modulant la troisième sous-porteuse $f_2$ durant un deuxième temps symbole (t=1).

La **figure 8B** illustre un signal pilote interférent $SP_2$' adapté à un tel signal pilote de référence $SP_1$'.

En particulier, outre les symboles pilotes de charge effective A décalés d'une sous-porteuse par rapport aux symboles pilotes de charge effective du signal pilote de référence $SP_1$', le signal pilote interférent $SP_2$' comprend des symboles pilotes complémentaires modulés durant les deux premiers temps symboles (t=0) et (t=1).

En ce qui concerne le premier temps symbole (t=0), outre le symbole pilote de charge totale F1 modulant la huitième sous-porteuse $f_7$, le signal pilote interférent $SP_2$' comprend des symboles pilotes complémentaires modulant les autres sous-porteuses $f_0$ à $f_6$ et $f_8$ à $f_{11}$ durant ce même premier temps symbole.

En ce qui concerne le deuxième temps symbole (t=1), outre le symbole pilote de charge totale F2 modulant la troisième sous-porteuse $f_2$, le signal pilote interférent $SP_2$' comprend des symboles pilotes complémentaires modulant les autres sous-porteuses $f_0$ à $f_1$ et $f_3$ à $f_{11}$ durant ce même deuxième temps symbole.

La présente invention vise en outre un programme d'ordinateur comportant des instructions de code pour la mise en oeuvre du procédé d'établissement de l'indicateur de qualité de canal CQI décrit précédemment, et notamment de l'étape de détermination de cet indicateur de qualité de canal CQI à partir des indicateurs de qualité de canal en charge totale $CQI_{CT}$ et effective $CQI_{CE}$, lorsque ce programme est exécuté par un module de traitement d'un dispositif émetteur, comme c'est le cas dans le mode de réalisation décrit à la figure 5B, ou d'un dispositif récepteur, comme c'est le cas dans le mode de réalisation décrit à la figure 4B.

Un tel programme peut utiliser n'importe quel langage de programmation, et être sous la forme d'un code source, code objet, ou de code intermédiaire entre code source et code objet, tel que dans une forme partiellement compilée, ou dans n'importe quelle autre forme souhaitable.

La présente invention vise aussi un support d'informations lisible par un processeur de données, et comportant des instructions de code d'un des programmes mentionnés ci-dessus. Ce support d'informations peut être n'importe quelle entité ou dispositif capable de stocker le programme susmentionné. Par exemple, le support peut comporter un moyen de stockage, tel qu'une ROM, par exemple un CD-ROM ou une ROM de circuit microélectronique, ou encore un moyen d'enregistrement magnétique, par exemple une disquette ou un disque dur. Ce support d'informations peut également comporter de la mémoire type FLASH, pour le stockage du programme et l'enregistrement des informations réceptionnées par un module client, et de la mémoire de type RAM pour la sauvegarde des données temporaires telles les listes serveurs et thèmes associés.

D'autre part, ce support d'informations peut être un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Ainsi, cette invention s'applique particulièrement à des réseaux cellulaire OFDM en mode FDD, tels que définis dans les normes 3GPP-LTE, LTE-A, IEEE WiMAX Mobile (IEEE 802.16) ou WiFI (IEEE 802.11).

## Revendications

1. Procédé d'établissement d'un indicateur de qualité (CQI) d'un canal de transmission radio dans une première cellule d'un réseau cellulaire utilisant une pluralité de sous-porteuses orthogonales multiplexées en fréquence pour transmettre des données, le procédé comprenant :

la transmission (11), par un premier dispositif émetteur ($NB_1$) situé dans la première cellule, d'un signal pilote de référence ($SP_1$) comprenant un signal pilote de charge totale ($SP_{CT}$) modulant au moins une desdites sous-porteuses orthogonales, durant au moins un premier temps symbole dédié à la transmission de symboles autres que des symboles de données, et un signal pilote de charge effective ($SP_{CE}$) modulant au moins une desdites sous-porteuses orthogonales durant au moins un deuxième temps symbole dédié à la transmission de symboles de données ;

pour chaque cellule voisine de la première cellule dans le réseau cellulaire, la transmission (13), par un dispositif émetteur ($NB_2$) situé dans ladite cellule voisine, d'un signal pilote interférent ($SP_2$) modulant, durant ledit au moins un premier temps symbole pendant lequel le signal pilote de charge totale ($SP_{CT}$) module au moins une desdites sous-porteuses, ladite au moins une sous-porteuse modulée par le signal pilote de charge totale ($SP_{CT}$) ;

la mesure (20), par un dispositif récepteur (M) situé dans la première cellule, d'un indicateur de qualité du canal en charge totale ($CQI_{CT}$) au moyen du signal pilote de charge totale ($SP_{CT}$) et d'un indicateur de qualité du canal en charge effective ($CQI_{CE}$) au moyen du signal pilote de charge effective ($SP_{CE}$) ; et

la détermination (30) de l'indicateur de qualité (CQI) du canal de transmission radio à partir de l'indicateur de qualité du canal en charge effective ($CQI_{CE}$) et de l'indicateur de qualité du canal en charge totale ($CQI_{CT}$).

2.  Procédé d'établissement d'un indicateur de qualité selon la revendication 1, dans lequel :

le signal pilote de charge totale ($SP_{CT}$) comprend au moins deux symboles pilotes de charge totale (F1,F2) modulant respectivement au moins deux sous-porteuses durant au moins un premier temps symbole dédié à la transmission de symboles autres que des symboles de données ou une sous-porteuse durant au moins deux premiers temps symbole dédiés à la transmission de symboles autres que des symboles de données ; et

le signal pilote interférent ($SP_2$) comprend une pluralité de symboles pilotes interférents parmi lesquels au moins deux symboles pilotes interférents (F1',F2') modulent respectivement, pour chacun des symboles pilotes de charge totale (F1,F2), la sous-porteuse modulée par ledit symbole pilote de charge totale durant le premier temps symbole où ladite sous-porteuse est modulée par ledit symbole pilote de charge totale.

3.  Procédé d'établissement d'un indicateur de qualité (CQI) selon la revendication 1 ou 2, dans lequel le signal pilote interférent ($SP_2$) ne module pas, durant ledit au moins un deuxième temps symbole pendant lequel le signal pilote de charge effective ($SP_{CE}$) module au moins une desdites sous-porteuses, ladite au moins une sous-porteuse modulée par le signal pilote de charge effective ($SP_{CE}$).

4.  Procédé d'établissement d'un indicateur de qualité (CQI) selon la revendication 3, dans lequel :

le signal pilote de charge effective ($SP_{CE}$) comprend au moins deux symboles pilotes de charge effective (A1,A2) modulant respectivement au moins deux sous-porteuses durant au moins un deuxième temps symbole dédié à la transmission de symboles de données ou une sous-porteuse durant au moins deux deuxièmes temps symbole dédiés à la transmission de symboles de données, et

le signal pilote interférent ($SP_2$) ne contient pas de symbole modulant, durant ledit au moins un deuxième temps symbole pendant lequel un symbole pilote de charge effective (A1,A2) module une desdites sous-porteuses, ladite sous-porteuse modulée par le symbole pilote de charge effective (A1,A2).

5.  Procédé d'établissement d'un indicateur de qualité selon la revendication 4, dans lequel les symboles pilotes du signal pilote de référence ($SP_1$) sont disposés selon un premier motif prédéterminé dans un bloc bidimensionnel temps-fréquence, et où, dans chacune desdites cellules voisines :

le signal pilote interférent ($SP_2$) comprend une pluralité de symboles pilotes disposés selon ledit motif prédéterminé et décalés en fréquence par rapport aux symboles pilotes du signal pilote de référence ; et

le signal pilote interférent ($SP_2$) comprend en outre une pluralité de symboles pilotes complémentaire (ds) modulant respectivement, durant chaque premier temps symbole pendant lequel un symbole pilote de charge totale (F1,F2) module une sous-porteuse, l'ensemble des sous-porteuses, parmi la pluralité de sous-porteuses orthogonales, qui ne sont modulées par aucun symbole.

6.  Procédé d'établissement d'un indicateur de qualité selon l'une des revendications 1 à 5, dans lequel la détermination (30) de l'indicateur de qualité du canal comprend le calcul de la valeur minimale ($Min[\Delta(CQI_{CE}-CQI_{CT})]$), sur une fenêtre de temps, de la fonction différence entre l'indicateur de qualité du canal en charge effective ($CQI_{CE}$) et l'indicateur de qualité du canal en charge totale ($CQI_{CT}$), l'indicateur de qualité du canal ($CQI_1$) étant déterminé comme étant la somme de l'indicateur de qualité du canal en charge totale ($CQI_{CT}$) et de ladite valeur minimale ($Min[\Delta(CQI_{CE}-CQI_{CT})]$).

**7.** Procédé d'établissement d'un indicateur de qualité selon l'une des revendications 1 à 5, dans lequel la détermination (30) de l'indicateur de qualité du canal comprend le calcul de la valeur moyenne ($Moy[\Delta(CQI_{CE}-CQI_{CT})]$), sur une fenêtre de temps, de la fonction différence entre l'indicateur de qualité du canal en charge effective ($CQI_{CE}$) et l'indicateur de qualité du canal en charge totale ($CQI_{CT}$), l'indicateur de qualité du canal ($CQI_2$) étant déterminé comme étant la somme de l'indicateur de qualité du canal en charge totale ($CQI_{CT}$) et de ladite valeur moyenne ($Moy[\Delta(CQI_{CE}-CQI_{CT})]$).

**8.** Procédé d'établissement d'un indicateur de qualité selon l'une des revendications 1 à 5, dans lequel la détermination de l'indicateur de qualité (CQI) comprend le calcul de la valeur minimale ($Min[\Delta(CQI_{CE}-CQI_{CT})]$), de la valeur moyenne ($Moy[\Delta(CQI_{CE}-CQI_{CT})]$) et de la valeur maximale ($Max[\Delta(COI_{CE}-CQI_{CT})]$), sur une fenêtre de temps, de la fonction différence entre l'indicateur de qualité du canal en charge effective ($CQI_{CE}$), l'indicateur de qualité du canal ($CQI_4$) étant déterminé comme étant la somme de l'indicateur de qualité du canal en charge totale ($CQI_{CT}$) et d'une deuxième variable, ladite deuxième variable étant choisie comme étant égale à ladite valeur minimale ($Min[\Delta(CQI_{CE}-CQI_{CT})]$) ou ladite valeur maximale ($Max[\Delta(CQI_{CE}-CQI_{CT})]$) en fonction de la comparaison de la valeur moyenne ($Moy[\Delta(CQI_{CE}-CQI_{CT})]$) avec un seuil (K).

**9.** Procédé d'établissement d'un indicateur de qualité selon l'une des revendications 1 à 8, dans lequel la détermination de l'indicateur de qualité (CQI) du canal de transmission radio est réalisée (37) dans le premier dispositif émetteur ($NB_1$), le procédé comprenant en outre la transmission (35) de l'indicateur de qualité du canal en charge totale ($CQI_{CT}$) et de l'indicateur de qualité du canal en charge effective ($CQI_{CE}$) du dispositif récepteur vers le premier dispositif émetteur.

**10.** Procédé d'établissement d'un indicateur de qualité selon l'une des revendications 1 à 9, dans lequel la détermination de l'indicateur de qualité (CQI) du canal de transmission radio est réalisée (31) dans le dispositif récepteur (M), le procédé comprenant en outre la transmission (33) de l'indicateur de qualité du dispositif récepteur vers le premier dispositif émetteur.

**11.** Procédé d'établissement d'un indicateur de qualité selon l'une des revendications 1 à 10, dans lequel les dispositifs émetteurs de la première cellule et des cellules voisines sont des stations de bases et le dispositif récepteur est un terminal mobile.

**12.** Programme d'ordinateur comprenant des instructions pour l'exécution des étape du procédé de détermination de l'indicateur de qualité (CQI) selon l'une quelconque des revendications 1 à 11, lorsque ledit programme est exécuté par un module de traitement d'un dispositif émetteur ou d'un dispositif récepteur.

**13.** Station de base pour l'établissement d'un indicateur de qualité (CQI) d'un canal de transmission radio avec au moins un terminal mobile (M), la station de base étant apte à transmettre des données au moyen d'une pluralité de sous-porteuses orthogonales multiplexées en fréquence et comprenant un module émetteur configuré pour émettre, vers le terminal mobile, un signal pilote de référence ($SP_1$) comprenant un signal pilote de charge totale ($SP_{CT}$) modulant au moins une desdites sous-porteuses orthogonales, durant au moins un premier temps symbole dédié à la transmission de symboles autres que des symboles de données, et un signal pilote de charge effective ($SP_{CE}$) modulant au moins une desdites sous-porteuses orthogonales durant au moins un deuxième temps symbole dédié à la transmission de symboles de données ;
le signal pilote de charge totale ($SP_{CT}$) et signal pilote de charge effective ($SP_{CE}$) étant aptes à être utilisés par le terminal mobile (M) pour mesurer respectivement un indicateur de qualité en charge totale ($CQI_{CT}$) et un indicateur de qualité en charge effective ($CQI_{CE}$) aptes à être utilisés pour déterminer l'indicateur de qualité (CQI).

**14.** Station de base pour l'établissement d'un indicateur de qualité (CQI) selon la revendication 13, comprenant en outre :

un module de réception apte à recevoir l'indicateur de qualité en charge totale ($CQI_{CT}$) et l'indicateur de qualité en charge effective ($CQI_{CE}$) mesurés par le terminal mobile (M) ; et
un module de traitement configuré pour déterminer l'indicateur de qualité (CQI) au moyen de l'indicateur de qualité en charge effective ($CQI_{CE}$) et de l'indicateur de qualité en charge totale ($CQI_{CT}$).

**15.** Terminal mobile pour l'établissement d'un indicateur de qualité (CQI) d'un canal de transmission radio avec une station de base ($NB_1$) apte à transmettre des données au moyen d'une pluralité de sous-porteuses orthogonales multiplexées en fréquence et comprenant :

un module émetteur apte à recevoir, de ladite station de base, un signal pilote de référence ($SP_1$) comprenant un signal pilote de charge totale ($SP_{CT}$) modulant au moins une desdites sous-porteuses orthogonales, durant au moins un premier temps symbole dédié à la transmission de symboles autres que des symboles de données, et un signal pilote de charge effective ($SP_{CE}$) modulant au moins une desdites sous-porteuses orthogonales durant au moins un deuxième temps symbole dédié à la transmission de symboles de données ; et un module de traitement configuré pour mesurer un indicateur de qualité en charge totale ($CQI_{CT}$) au moyen du signal pilote de charge totale ($SP_{CT}$) et un indicateur de qualité en charge effective ($CQI_{CE}$) au moyen du signal pilote de charge effective ($SP_{CE}$), l'indicateur de qualité en charge effective ($CQI_{CE}$) et l'indicateur de qualité en charge totale ($CQI_{CT}$) étant aptes à être utilisés pour déterminer l'indicateur de qualité (CQI).

16. Terminal mobile pour l'établissement d'un indicateur de qualité (CQI) selon la revendication 15, dans lequel le module de traitement est configuré en outre pour déterminer l'indicateur de qualité (CQI) au moyen de l'indicateur de qualité en charge effective ($CQI_{CE}$) et de l'indicateur de qualité en charge totale ($CQI_{CT}$), le terminal mobile comprenant en outre un module d'émission configuré pour transmettre l'indicateur de qualité (CQI) à la station de base ($NB_1$).

17. Réseau cellulaire dans lequel une pluralité de sous-porteuses orthogonales multiplexées en fréquence sont utilisées pour transmettre des données, le réseau cellulaire comprenant au moins une première station de base ($NB_1$) selon l'une des revendications 13 ou 14, au moins une deuxième station de base ($NB_2$), située dans une cellule voisine de la cellule dans laquelle est située la première station de base, la deuxième station de base émettant un signal pilote interférent ($SP_2$) modulant, durant au moins un premier temps symbole pendant lequel le signal pilote de charge totale ($SP_{CT}$) module au moins une desdites sous-porteuses, ladite au moins une sous-porteuse modulée par le signal pilote de charge totale ($SP_{CT}$).

## Patentansprüche

1. Verfahren zur Erstellung eines Qualitätsindikators (CQI) eines Funkübertragungskanals in einer ersten Zelle eines zellularen Netzwerks, der eine Vielzahl von orthogonalen Frequenzmultiplex-Unterträgern verwendet, um Daten zu übertragen, wobei das Verfahren enthält:

die Übertragung (11), durch eine in der ersten Zelle befindliche erste Sendevorrichtung ($NB_1$), eines Bezugs-Pilotsignals ($SP_1$), das ein Gesamtlast-Pilotsignal ($SP_{CT}$), das mindestens einen der orthogonalen Unterträger während mindestens einer ersten Symbolzeit moduliert, die der Übertragung von anderen Symbolen als Datensymbolen dediziert ist, und ein Nutzlast-Pilotsignal ($SP_{CE}$) enthält, das mindestens einen der orthogonalen Unterträger während mindestens einer zweiten Symbolzeit moduliert, die der Übertragung von Datensymbolen dediziert ist;

für jede der ersten Zelle im zellularen Netzwerk benachbarte Zelle, die Übertragung (13), durch eine in der Nachbarzelle befindliche Sendevorrichtung ($NB_2$), eines interferierenden Pilotsignals ($SP_2$), das während der mindestens einen ersten Symbolzeit, während der das Gesamtlast-Pilotsignal ($SP_{CT}$) mindestens einen der Unterträger moduliert, den mindestens einen vom Gesamtlast-Pilotsignal ($SP_{CT}$) modulierten Unterträger moduliert;

die Messung (20), durch eine in der ersten Zelle befindliche Empfangsvorrichtung (M), eines Qualitätsindikators des Gesamtlastkanals ($CQI_{CT}$) mittels des Gesamtlast-Pilotsignals ($SP_{CT}$) und eines Qualitätsindikators des Nutzlastkanals ($CQI_{CE}$) mittels des Nutzlast-Pilotsignals ($SP_{CE}$); und

die Bestimmung (30) des Qualitätsindikators (CQI) des Funkübertragungskanals ausgehend vom Qualitätsindikator des Nutzlastkanals ($CQI_{CE}$) und vom Qualitätsindikator des Gesamtlastkanals ($CQI_{CT}$).

2. Verfahren zur Erstellung eines Qualitätsindikators nach Anspruch 1, wobei:

das Gesamtlast-Pilotsignal ($SP_{CT}$) mindestens zwei Gesamtlast-Pilotsymbole (F1, F2) enthält, die je mindestens zwei Unterträger während mindestens einer ersten Symbolzeit, die der Übertragung von anderen Symbolen als Datensymbolen dediziert ist, oder einen Unterträger während mindestens zwei ersten Symbolzeiten modulieren, die der Übertragung von anderen Symbolen als Datensymbolen dediziert sind; und

das interferierende Pilotsignal ($SP_2$) eine Vielzahl von interferierenden Pilotsymbolen enthält, von denen mindestens zwei interferierende Pilotsymbole (F1', F2') für jedes der Gesamtlast-Pilotsymbole (F1, F2) den während der ersten Symbolzeit, während der der Unterträger vom Gesamtlast-Pilotsymbol moduliert wird, vom Gesamtlast-Pilotsymbol modulierten Unterträger modulieren.

**3.** Verfahren zur Erstellung eines Qualitätsindikators (CQI) nach Anspruch 1 oder 2, wobei das interferierende Pilotsignal ($SP_2$) während der mindestens einen zweiten Symbolzeit, während der das Nutzlast-Pilotsignal ($SP_{CE}$) mindestens einen der Unterträger moduliert, nicht den mindestens einen vom Nutzlast-Pilotsignal ($SP_{CE}$) modulierten Unterträger moduliert.

**4.** Verfahren zur Erstellung eines Qualitätsindikators (CQI) nach Anspruch 3, wobei:

das Nutzlast-Pilotsignal ($SP_{CE}$) mindestens zwei Nutzlast-Pilotsymbole (A1, A2) enthält, die je mindestens zwei Unterträger während mindestens einer zweiten Symbolzeit, die der Übertragung von Datensymbolen dediziert ist, oder einen Unterträger während mindestens zwei zweiten Symbolzeiten modulieren, die der Übertragung von Datensymbolen dediziert sind, und
das interferierende Pilotsignal ($SP_2$) kein Symbol enthält, das während der mindestens einen zweiten Symbolzeit, während der ein Nutzlast-Pilotsymbol (A1, A2) einen der Unterträger moduliert, den vom Nutzlast-Pilotsymbol (A1, A2) modulierten Unterträger moduliert.

**5.** Verfahren zur Erstellung eines Qualitätsindikators nach Anspruch 4, wobei die Pilotsymbole des Bezugs-Pilotsignals ($SP_1$) gemäß einem ersten vorbestimmten Muster in einem zweidimensionalen Zeit-Frequenz-Block angeordnet sind, und wobei in jeder der benachbarten Zellen:

das interferierende Pilotsignal ($SP_2$) eine Vielzahl von Pilotsymbolen enthält, die gemäß dem vorbestimmten Muster angeordnet und bezüglich der Pilotsymbole des Bezugs-Pilotsignals frequenzverschoben sind; und
das interferierende Pilotsignal ($SP_2$) außerdem eine komplementäre Vielzahl von Pilotsymbolen (ds) enthält, die je während jeder ersten Symbolzeit, während der ein Gesamtlast-Pilotsymbol (F1, F2) einen Unterträger moduliert, die Gesamtheit der Unterträger unter der Vielzahl von orthogonalen Unterträgern moduliert, die durch kein Symbol moduliert sind.

**6.** Verfahren zur Erstellung eines Qualitätsindikators nach einem der Ansprüche 1 bis 5, wobei die Bestimmung (30) des Qualitätsindikators des Kanals die Berechnung des Minimalwerts ($Min[\Delta(CQI_{CE}-CQI_{CT})]$), in einem Zeitfenster, der Differenzfunktion zwischen dem Qualitätsindikator des Nutzlastkanals ($CQI_{CE}$) und dem Qualitätsindikator des Gesamtlastkanals ($CQI_{CT}$) enthält, wobei der Qualitätsindikator des Kanals ($CQI_1$) bestimmt wird als die Summe des Qualitätsindikators des Gesamtlastkanals ($CQI_{CT}$) und des Minimalwerts ($Min[\Delta(CQI_{CE}-CQI_{CT})]$).

**7.** Verfahren zur Erstellung eines Qualitätsindikators nach einem der Ansprüche 1 bis 5, wobei die Bestimmung (30) des Qualitätsindikators des Kanals die Berechnung des Mittelwerts ($Moy[\Delta(CQI_{CE}-CQI_{CT})]$), in einem Zeitfenster, der Differenzfunktion zwischen dem Qualitätsindikator des Nutzlastkanals ($CQI_{CE}$) und dem Qualitätsindikator des Gesamtlastkanals ($CQI_{CT}$) enthält, wobei der Qualitätsindikator des Kanals ($CQI_2$) bestimmt wird als die Summe des Qualitätsindikators des Gesamtlastkanals ($CQI_{CT}$) und des Mittelwerts ($Moy[\Delta(CQI_{CE}-CQI_{CT})]$).

**8.** Verfahren zur Erstellung eines Qualitätsindikators nach einem der Ansprüche 1 bis 5, wobei die Bestimmung des Qualitätsindikators (CQI) die Berechnung des Minimalwerts ($Min [\Delta(CQI_{CE}-CQI_{CT})]$), des Mittelwerts ($Moy [\Delta(CQI_{CE}-CQI_{CT})]$) und des Maximalwerts ($Max[\Delta(CQI_{CE}-CQI_{CT})]$), in einem Zeitfenster, der Differenzfunktion zwischen dem Qualitätsindikator des Nutzlastkanals ($CQI_{CE}$) enthält, wobei der Qualitätsindikator des Kanals ($CQI_4$) bestimmt wird als die Summe des Qualitätsindikators des Gesamtlastkanals ($CQI_{CT}$) und einer zweiten Variablen, wobei die zweite Variable gewählt wird als gleich dem Minimalwert ($Min [\Delta(CQI_{CE}-CQI_{CT})]$) oder dem Maximalwert ($Max[\Delta(CQI_{CE}-CQI_{CT})]$), abhängig vom Vergleich des Mittelwerts ($Moy[\Delta(CQI_{CE}-CQI_{CT})]$) mit einer Schwelle (K) .

**9.** Verfahren zur Erstellung eines Qualitätsindikators nach einem der Ansprüche 1 bis 8, wobei die Bestimmung des Qualitätsindikators (CQI) des Funkübertragungskanals in der ersten Sendevorrichtung ($NB_1$) durchgeführt wird (37), wobei das Verfahren außerdem die Übertragung (35) des Qualitätsindikators des Gesamtlastkanals ($CQI_{CT}$) und des Qualitätsindikators des Nutzlastkanals ($CQI_{CE}$) von der Empfangsvorrichtung zur ersten Sendevorrichtung enthält.

**10.** Verfahren zur Erstellung eines Qualitätsindikators nach einem der Ansprüche 1 bis 9, wobei die Bestimmung des Qualitätsindikators (CQI) des Funkübertragungskanals in der Empfangsvorrichtung (M) durchgeführt wird (31), wobei das Verfahren außerdem die Übertragung (33) des Qualitätsindikators von der Empfangsvorrichtung zur ersten Sendevorrichtung enthält.

**11.** Verfahren zur Erstellung eines Qualitätsindikators nach einem der Ansprüche 1 bis 10, wobei die Sendevorrichtungen der ersten Zelle und der benachbarten Zellen Basisstationen sind, und die Empfangsvorrichtung ein mobiles Endgerät ist.

**12.** Computerprogramm, das Anweisungen zur Ausführung der Schritte des Verfahrens zur Bestimmung des Qualitätsindikators (CQI) nach einem der Ansprüche 1 bis 11 enthält, wenn das Programm von einem Verarbeitungsmodul einer Sendevorrichtung oder einer Empfangsvorrichtung ausgeführt wird.

**13.** Basisstation zur Erstellung eines Qualitätsindikators (CQI) eines Funkübertragungskanals mit mindestens einem mobilen Endgerät (M), wobei die Basisstation Daten mittels einer Vielzahl von orthogonalen Frequenzmultiplex-Unterträgern übertragen kann und ein Sendemodul enthält, das konfiguriert ist, zum mobilen Endgerät ein Bezugs-Pilotsignal ($SP_1$) zu senden, das ein Gesamtlast-Pilotsignal ($SP_{CT}$), das mindestens einen der orthogonalen Unterträger während mindestens einer ersten Symbolzeit moduliert, die der Übertragung von anderen Symbolen als Datensymbolen dediziert ist, und ein Nutzlast-Pilotsignal ($SP_{CE}$) enthält, das mindestens einen der orthogonalen Unterträger während mindestens einer zweiten Symbolzeit moduliert, die der Übertragung von Datensymbolen dediziert ist; wobei das Gesamtlast-Pilotsignal ($SP_{CT}$) und das Nutzlast-Pilotsignal ($SP_{CE}$) fähig sind, vom mobilen Endgerät (M) verwendet zu werden, um einen Gesamtlast-Qualitätsindikator ($CQI_{CT}$) bzw. einen Nutzlast-Qualitätsindikator ($CQI_{CE}$) zu messen, die verwendet werden können, um den Qualitätsindikator (CQI) zu bestimmen.

**14.** Basisstation zur Erstellung eines Qualitätsindikators (CQI) nach Anspruch 13, die außerdem enthält:

ein Empfangsmodul, das den Gesamtlast-Qualitätsindikator ($CQI_{CT}$) und den Nutzlast-Qualitätsindikator ($CQI_{CE}$) empfangen kann, die vom mobilen Endgerät (M) gemessen werden; und
ein Verarbeitungsmodul, das konfiguriert ist, den Qualitätsindikator (CQI) mittels des Nutzlast-Qualitätsindikators ($CQI_{CE}$) und des Gesamtlast-Qualitätsindikators ($CQI_{CT}$) zu bestimmen.

**15.** Mobiles Endgerät zur Erstellung eines Qualitätsindikators (CQI) eines Funkübertragungskanals mit einer Basisstation ($NB_1$), die Daten mittels einer Vielzahl von orthogonalen Frequenzmultiplex-Unterträgern übertragen kann und enthält:

ein Sendemodul, das von der Basisstation ein Bezugs-Pilotsignal ($SP_1$) empfangen kann, das ein Gesamtlast-Pilotsignal ($SP_{CT}$), das mindestens einen der orthogonalen Unterträger während mindestens einer ersten Symbolzeit moduliert, die anderen Symbolen als Datensymbolen dediziert ist, und ein Nutzlast-Pilotsignal ($SP_{CE}$) enthält, das mindestens einen der orthogonalen Unterträger während mindestens einer zweiten Symbolzeit moduliert, die der Übertragung von Datensymbolen dediziert ist; und
ein Verarbeitungsmodul, das konfiguriert ist, einen Gesamtlast-Qualitätsindikator ($CQI_{CT}$) mittels des Gesamtlast-Pilotsignals ($SP_{CT}$) und einen Nutzlast-Qualitätsindikator ($CQI_{CE}$) mittels des Nutzlast-Pilotsignals ($SP_{CE}$) zu messen, wobei der Nutzlast-Qualitätsindikator ($CQI_{CE}$) und der Gesamtlast-Qualitätsindikator ($CQI_{CT}$) verwendet werden können, um den Qualitätsindikator (CQI) zu bestimmen.

**16.** Mobiles Endgerät zur Erstellung eines Qualitätsindikators (CQI) nach Anspruch 15, wobei das Verarbeitungsmodul außerdem konfiguriert ist, den Qualitätsindikator (CQI) mittels des Nutzlast-Qualitätsindikators ($CQI_{CE}$) und des Gesamtlast-Qualitätsindikators ($CQI_{CT}$) zu bestimmen, wobei das mobile Endgerät außerdem ein Sendemodul enthält, das konfiguriert ist, den Qualitätsindikator (CQI) an die Basisstation ($NB_1$) zu übertragen.

**17.** Zellulares Netzwerk, in dem eine Vielzahl von orthogonalen Frequenzmultiplex-Unterträgern verwendet wird, um Daten zu übertragen, wobei das zellulare Netzwerk mindestens eine erste Basisstation ($NB_1$) nach einem der Ansprüche 13 oder 14 und mindestens eine zweite Basisstation ($NB_2$) aufweist, die sich in einer Zelle befindet, die der Zelle benachbart ist, in der sich die erste Basisstation befindet, wobei die zweite Basisstation ein interferierendes Pilotsignal ($SP_2$) sendet, das während mindestens einer ersten Symbolzeit, während der das Gesamtlast-Pilotsignal ($SP_{CT}$) mindestens einen der Unterträger moduliert, den mindestens einen vom Gesamtlast-Pilotsignal ($SP_{CT}$) modulierten Unterträger moduliert.

**Claims**

**1.** Method for establishing a quality indicator (CQI) for a radio transmission channel in a first cell of a cellular network using a plurality of frequency-division-multiplexed orthogonal subcarriers for transmitting data, the method comprising:

the transmission (11), by a first transmitting device ($NB_1$) located in the first cell, of a reference pilot signal ($SP_1$) comprising a total load pilot signal ($SP_{CT}$) modulating at least one of said orthogonal subcarriers, during at least a first symbol time dedicated to the transmission of symbols other than data symbols, and an effective load pilot signal ($SP_{CE}$) modulating at least one of said orthogonal subcarriers during at least one second symbol time dedicated to the transmission of data symbols;

for each cell adjacent to the first cell in the cellular network, the transmission (13), by a transmitting device ($NB_2$) located in said adjacent cell, of an interfering pilot signal ($SP_2$) modulating, during said at least one first symbol time, during which the total load pilot signal ($SP_{CT}$) modulates at least one of said subcarriers, said at least one subcarrier modulated by the total load pilot signal ($SP_{CT}$);

the measurement (20), by a receiving device (M) located in the first cell, of a quality indicator for the channel at total load ($CQI_{CT}$) by means of the total load pilot signal ($SP_{CT}$) and of a quality indicator for the channel at effective load ($CQI_{CE}$) by means of the effective load pilot signal ($SP_{CE}$); and

the determination (30) of the quality indicator (CQI) for the radio transmission channel from the quality indicator for the channel at effective load ($CQI_{CE}$) and the quality indicator for the channel at total load ($CQI_{CT}$) .

2. Method for establishing a quality indicator according to Claim 1, in which:

the total load pilot signal ($SP_{CT}$) comprises at least two total load pilot symbols (F1, F2) respectively modulating at least two subcarriers during at least one first symbol time dedicated to the transmission of symbols other than data symbols or one subcarrier during at least two first symbol times dedicated to the transmission of symbols other than data symbols; and

the interfering pilot signal ($SP_2$) comprises a plurality of interfering pilot symbols among which at least two interfering pilot symbols (F1', F2') respectively modulate, for each of the total load pilot symbols (F1, F2), the subcarrier modulated by said total load pilot symbol during the first symbol time in which said subcarrier is modulated by said total load pilot symbol.

3. Method for establishing a quality indicator (CQI) according to Claim 1 or 2, in which the interfering pilot signal ($SP_2$) does not modulate, during said at least one second symbol time during which the effective load pilot signal ($SP_{CE}$) modulates at least one of said subcarriers, said at least one subcarrier modulated by the effective load pilot signal ($SP_{CE}$).

4. Method for establishing a quality indicator (CQI) according to Claim 3, in which:

the effective load pilot signal ($SP_{CE}$) comprises at least two effective load pilot symbols (A1, A2) respectively modulating at least two subcarriers during at least one second symbol time dedicated to the transmission of data symbols or one subcarrier during at least two second symbol times dedicated to the transmission of data symbols, and

the interfering pilot signal ($SP_2$) does not contain a symbol modulating, during said at least one second symbol time during which an effective load pilot symbol (A1, A2) modulates one of said subcarriers, said subcarrier modulated by the effective load pilot symbol (A1, A2).

5. Method for establishing a quality indicator according to Claim 4, in which the pilot symbols of the reference pilot signal ($SP_1$) are arranged according to a first predetermined pattern in a two-dimensional time/frequency block, and where, in each of said adjacent cells:

the interfering pilot signal ($SP_2$) comprises a plurality of pilot symbols arranged according to said predetermined pattern and frequency-shifted in relation to the pilot symbols of the reference pilot signal; and

the interfering pilot signal ($SP_2$) moreover comprises a plurality of complementary pilot symbols (ds) respectively modulating, during each first symbol time during which a total load pilot symbol (F1, F2) modulates a subcarrier, all of the subcarriers, among the plurality of orthogonal subcarriers, that are not modulated by any symbol.

6. Method for establishing a quality indicator according to one of Claims 1 to 5, in which the determination (30) of the quality indicator for the channel comprises the calculation of the minimum value (Min [$\Delta(CQI_{CE}-CQI_{CT})$]), over a time window, of the difference function between the quality indicator for the channel at effective load ($CQI_{CE}$) and the quality indicator for the channel at total load ($CQI_{CT}$), the quality indicator for the channel ($CQI_1$) being determined as being the sum of the quality indicator for the channel at total load ($CQI_{CT}$) and said minimum value (Min[$\Delta(CQI_{CE}-CQI_{CT})$]).

7. Method for establishing a quality indicator according to one of Claims 1 to 5, in which the determination (30) of the quality indicator for the channel comprises the calculation of the mean value ($Moy[\Delta(CQI_{CE}-CQI_{CT})]$), over a time window, of the difference function between the quality indicator for the channel at effective load ($CQI_{CE}$) and the quality indicator for the channel at total load ($CQI_{CT}$), the quality indicator for the channel ($CQI_2$) being determined as being the sum of the quality indicator for the channel at total load ($CQI_{CT}$) and said mean value ($Moy[\Delta(CQI_{CE}-CQI_{CT})]$).

8. Method for establishing a quality indicator according to one of Claims 1 to 5, in which the determination of the quality indicator (CQI) comprises the calculation of the minimum value ($Min[\Delta(CQI_{CE}-CQI_{CT})]$), of the mean value ($Moy[\Delta(CQI_{CE}-CQI_{CT})]$) and of the maximum value ($Max[\Delta(CQI_{CE}-CQI_{CT})]$), over a time window, of the difference function between the quality indicator for the channel at effective load ($CQI_{CE}$), the quality indicator for the channel (CQI4) being determined as being the sum of the quality indicator for the channel at total load ($CQI_{CT}$) and a second variable, said second variable being chosen as being equal to said minimum value ($Min[\Delta(CQI_{CE}-CQI_{CT})]$) or said maximum value ($Max[\Delta(CQI_{CE}-CQI_{CT})]$) on the basis of the comparison of the mean value ($Moy[\Delta(CQI_{CE}-CQI_{CT})]$) with a threshold (K).

9. Method for establishing a quality indicator according to one of Claims 1 to 8, in which the determination of the quality indicator (CQI) for the radio transmission channel is carried out (37) in the first transmitting device ($NB_1$), the method moreover comprising the transmission (35) of the quality indicator for the channel at total load ($CQI_{CT}$) and of the quality indicator for the channel at effective load ($CQI_{CE}$) from the receiving device to the first transmitting device.

10. Method for establishing a quality indicator according to one of Claims 1 to 9, in which the determination of the quality indicator (CQI) for the radio transmission channel is carried out (31) in the receiving device (M), the method moreover comprising the transmission (33) of the quality indicator from the receiving device to the first transmitting device.

11. Method for establishing a quality indicator according to one of Claims 1 to 10, in which the transmitting devices of the first cell and of the adjacent cells are base stations and the receiving device is a mobile terminal.

12. Computer program comprising instructions for the execution of the steps of the method for determining the quality indicator (CQI) according to any one of Claims 1 to 11 when said program is executed by a processing module of a transmitting device or of a receiving device.

13. Base station for establishing a quality indicator (CQI) for a radio transmission channel with at least one mobile terminal (M), the base station being capable of transmitting data by means of a plurality of frequency-division-multiplexed orthogonal subcarriers and comprising a transmitting module configured to transmit, to the mobile terminal, a reference pilot signal ($SP_1$) comprising a total load pilot signal ($SP_{CT}$) modulating at least one of said orthogonal subcarriers, during at least one first symbol time dedicated to the transmission of symbols other than data symbols, and an effective load pilot signal ($SP_{CE}$) modulating at least one of said orthogonal subcarriers during at least one second symbol time dedicated to the transmission of data symbols;
the total load pilot signal ($SP_{CT}$) and effective load pilot signal ($SP_{CE}$) being capable of being used by the mobile terminal (M) to respectively measure a quality indicator at total load ($CQI_{CT}$) and a quality indicator at effective load ($CQI_{CE}$) that are capable of being used to determine the quality indicator (CQI).

14. Base station for establishing a quality indicator (CQI) according to Claim 13, moreover comprising:

   a reception module capable of receiving the quality indicator at total load ($CQI_{CT}$) and the quality indicator at effective load ($CQI_{CE}$) that are measured by the mobile terminal (M); and
   a processing module configured to determine the quality indicator (CQI) by means of the quality indicator at effective load ($CQI_{CE}$) and the quality indicator at total load ($CQI_{CT}$).

15. Mobile terminal for establishing a quality indicator (CQI) for a radio transmission channel with a base station ($NB_1$) that is capable of transmitting data by means of a plurality of frequency-division-multiplexed orthogonal subcarriers and comprising:

   a transmitting module that is capable of receiving, from said base station, a reference pilot signal ($SP_1$) comprising a total load pilot signal ($SP_{CT}$) modulating at least one of said orthogonal subcarriers, during at least one first symbol time dedicated to the transmission of symbols other than data symbols, and an effective load pilot signal ($SP_{CE}$) modulating at least one of said orthogonal subcarriers during at least one second symbol time dedicated to the transmission of data symbols; and
a processing module configured to measure a quality indicator at total load ($CQI_{CT}$) by means of the total load pilot signal ($SP_{CT}$) and a quality indicator at effective load ($CQI_{CE}$) by means of the effective load pilot signal ($SP_{CE}$), the quality indicator at effective load ($CQI_{CE}$) and the quality indicator at total load ($CQI_{CT}$) being capable of being used to determine the quality indicator (CQI).

16. Mobile terminal for establishing a quality indicator (CQI) according to Claim 15, in which the processing module is moreover configured to determine the quality indicator (CQI) by means of the quality indicator at effective load ($CQI_{CE}$) and the quality indicator at total load ($CQI_{CT}$), the mobile terminal moreover comprising a transmission module configured to transmit the quality indicator (CQI) to the base station ($NB_1$).

17. Cellular network in which a plurality of frequency-division-multiplexed orthogonal subcarriers are used to transmit data, the cellular network comprising at least one first base station ($NB_1$) according to either of Claims 13 and 14, at least one second base station ($NB_2$), located in a cell that is adjacent to the cell in which the first base station is located, the second base station transmitting an interfering pilot signal ($SP_2$) modulating, during at least one first symbol time during which the total load pilot signal ($SP_{CT}$) modulates at least one of said subcarriers, said at least one subcarrier modulated by the total load pilot signal ($SP_{CT}$).

**Fig. 1**

13

11

$NB_1 \longrightarrow SP_1$

$NB_2 \longrightarrow SP_2$ ... $NB_N \longrightarrow SP_N$

20

M

$SP_{CT} \longrightarrow CQI_{CT}$
$SP_{CE} \longrightarrow CQI_{CE}$

30

$CQI_{CT}, CQI_{CE} \longrightarrow CQI$

**CQI**

**Fig. 2**

**Fig. 3A**

**Fig. 3B**

**Fig. 3C**

**Fig. 3D**

**Fig. 3E**

**Fig. 4A**

**Fig. 4B**

**Fig. 5A**

**Fig. 5B**

**Fig. 6A**

**Fig. 6D**

Fig. 6B

Fig. 6C

**Fig. 7A**

**Fig. 7B**

**Fig. 7C**

**Fig. 8A**

**Fig. 8B**

## RÉFÉRENCES CITÉES DANS LA DESCRIPTION

**Documents brevets cités dans la description**

- WO 0249305 A

**Littérature non-brevet citée dans la description**

- 3GPP LTE Downlink System Performance. **FARAJI-DANA et al.** Global Telecommunications Conference. GLOBECOM, 2009

- **ROSA C. et al.** Performance aspects of LTE uplink with variable load and bursty data traffic. *Personal Indoor and Mobile Radio Communications (PIMRC),* 2010